# EUROPEAN PATENT APPLICATION

(11) **EP 4 672 516 A1**
(43) Date of publication of application: **31.12.2025**
(21) Application number: 24769919.2
(22) Date of filing: 12.03.2024
(51) Int. Cl.: H01S 3/10, H04B 10/29, G02F 1/39

(54) **OPTICAL FIBER AMPLIFIER, OPTICAL POWER AMPLIFICATION METHOD, RELATED DEVICE, AND SYSTEM**

(30) Priority: 15.03.2023 CN 202310277533
(71) Applicant: Huawei Technologies Co., Ltd., Shenzhen, Guangdong 518129 (CN)
(72) Inventor: ZHANG, Wendou, Shenzhen, Guangdong 518129 (CN); XU, Bo, Shenzhen, Guangdong 518129 (CN); LIU, Hao, Shenzhen, Guangdong 518129 (CN); DU, Wenxiong, Shenzhen, Guangdong 518129 (CN)
(74) Representative: Maiwald GmbH
(86) International application number: PCT/CN2024/081114
(87) International publication number: WO 2024/188227

(57) **Abstract**

Embodiments of this application disclose an optical fiber amplifier, an optical power amplification method, a related device, and a system, to enhance integration and improve pumping efficiency of the optical fiber amplifier, and independently adjust a gain of optical power of each optical signal. The optical fiber amplifier provided in embodiments of this application includes a first optical combining/splitting module, a multi-core gain module, and a second optical combining/splitting module. The first optical combining/splitting module is configured to couple a first optical signal to a first gain fiber core. The first gain fiber core is configured to amplify optical power of the first optical signal to obtain a second optical signal, and is configured to couple the second optical signal to the second optical combining/splitting module. The second optical combining/splitting module is configured to couple the second optical signal to a second gain fiber core. The second gain fiber core is configured to amplify optical power of the second optical signal to obtain an amplified second optical signal, where the first gain fiber core and the second gain fiber core separately perform optical power amplification based on different pump optical signals.

## Description

This application claims priority to Chinese Patent Application No. CN202310277533.3, filed with the China National Intellectual Property Administration on March 15, 2023 and entitled "OPTICAL FIBER AMPLIFIER, OPTICAL POWER AMPLIFICATION METHOD, RELATED DEVICE, AND SYSTEM", which is incorporated herein by reference in its entirety.

### TECHNICAL FIELD

This application relates to the field of optical communication, and in particular, to an optical fiber amplifier, an optical power amplification method, a related device, and a system.

### BACKGROUND

In an optical communication system, to compensate for an optical power loss of a transmission link, an optical fiber amplifier configured to amplify optical power of an optical signal needs to be disposed in the optical communication system.

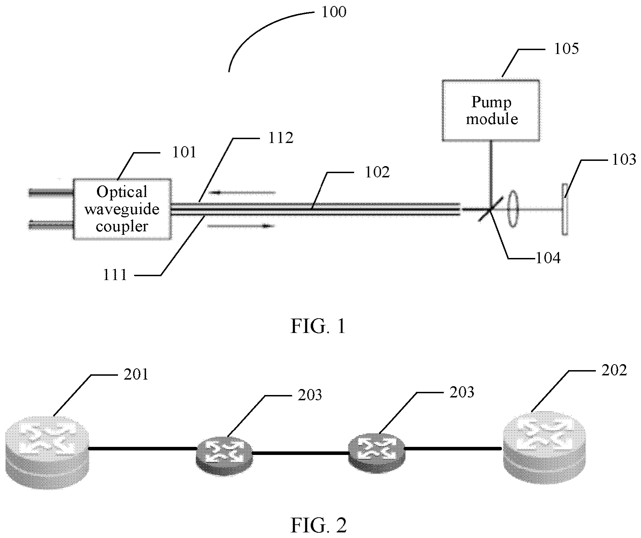

FIG. 1 is a diagram of a structure of an existing optical fiber amplifier. The optical fiber amplifier 100 includes an optical waveguide coupler 101, a multi-core optical fiber 102, a reflector 103, a pump mirror 104, and a pump module 105. The multi-core optical fiber 102 includes a plurality of fiber cores. The optical waveguide coupler 101 receives a first optical signal. The first optical signal is coupled to the reflector 103 along a first fiber core 111 included in the multi-core optical fiber 102. The reflector 103 reflects a transmission direction of the first optical signal, and sends a reflected second optical signal to a second fiber core 112 included in the multi-core optical fiber 102. Pump light emitted by the pump module 105 is coupled to the pump mirror 104, and the pump mirror 104 reflects the pump light to transmit the reflected pump light to the multi-core optical fiber 102. The reflected pump light provides pumping for both the first fiber core 111 and the second fiber core 112 included in the multi-core optical fiber 102. The reflected pump light can provide energy for the multi-core optical fiber 102, so that under an action of the reflected pump light, the first fiber core 111 is configured to amplify optical power of the received first optical signal, and the second fiber core 112 is configured to amplify optical power of the received second optical signal.

However, because the first optical signal is reflected back to the multi-core optical fiber 102 for optical power amplification, the reflector 103 needs to be configured. Reflection of the reflector 103 severely degrades an amplification noise figure (noise figure, NF). A cladding for protecting the multi-core optical fiber 102 is on an outer circumferential surface of the multi-core optical fiber 102. The reflected pump light is irradiated on the cladding, and most energy of the reflected pump light is lost on the cladding. Consequently, the reflected pump light can be used for pumping only some fiber cores included in the multi-core optical fiber 102. In addition, because the reflected pump light is used for pumping both the first fiber core 111 and the second fiber core 112, a gain of each fiber core included in the multi-core optical fiber 102 cannot be independently adjusted.

### SUMMARY

Embodiments of this application provide an optical fiber amplifier, an optical power amplification method, a related device, and a system, to enhance integration and improve pumping efficiency of the optical fiber amplifier.

According to a first aspect of this application, an optical fiber amplifier is provided, including a first optical combining/splitting module, a multi-core gain module, and a second optical combining/splitting module. The multi-core gain module is connected between the first optical combining/splitting module and the second optical combining/splitting module, and the multi-core gain module includes at least a first gain fiber core and a second gain fiber core. The first optical combining/splitting module is configured to couple a first optical signal to the first gain fiber core. The first gain fiber core is configured to amplify optical power of the first optical signal to obtain a second optical signal, and is configured to couple the second optical signal to the second optical combining/splitting module. The second optical combining/splitting module is configured to couple the second optical signal to the second gain fiber core. The second gain fiber core is configured to amplify optical power of the second optical signal to obtain an amplified second optical signal.

Through the optical fiber amplifier in this aspect, the multi-core gain module includes a plurality of gain fiber cores that each are configured to amplify optical power. This enhances integration of the optical fiber amplifier. The second optical combining/splitting module effectively improves efficiency of coupling the second optical signal into the second gain fiber core, to alleviate NF degradation.

According to the first aspect, in an optional implementation, the first gain fiber core and the second gain fiber core separately perform optical power amplification based on different pump optical signals.

In an implementation, the first gain fiber core and the second gain fiber core separately pump the first optical signal and the second optical signal based on different pump optical signals, so that each optical signal is independently pumped. The optical fiber amplifier can independently adjust optical power of a pump optical signal based on which the first gain fiber core performs optical power amplification, and can independently adjust optical power of a pump optical signal based on which the second gain fiber core performs optical power amplification, to independently adjust a gain of an optical signal whose transmission is performed in each gain fiber core.

According to the first aspect, in an optional implementation, the optical fiber amplifier further includes a target pump module. The target pump module is connected to a target optical combining/splitting module, and the target optical combining/splitting module is at least either of the first optical combining/splitting module or the second optical combining/splitting module. The target optical combining/splitting module is configured to receive a first pump optical signal and a second pump optical signal from the target pump module. The target optical combining/splitting module is configured to couple the first pump optical signal to the first gain fiber core, and is configured to couple the second pump optical signal to the second gain fiber core. In a process in which the first gain fiber core is configured to amplify the optical power of the first optical signal to obtain the second optical signal, the first gain fiber core is specifically configured to amplify the optical power of the first optical signal under an action of the first pump optical signal to obtain the second optical signal. In a process in which the second gain fiber core is configured to amplify the optical power of the second optical signal to obtain the amplified second optical signal, the second gain fiber core is specifically configured to amplify the optical power of the second optical signal under an action of the second pump optical signal to obtain the amplified second optical signal.

In this implementation, the target optical combining/splitting module can couple the first pump optical signal from the target pump module to the first gain fiber core, and can couple the second pump optical signal to the second gain fiber core, so that the first gain fiber core and the second gain fiber core separately perform optical power amplification based on the first pump optical signal and the second pump optical signal that are different from each other.

According to the first aspect, in an optional implementation, the target pump module includes a first pump module, the target optical combining/splitting module includes the first optical combining/splitting module, the first optical combining/splitting module is connected to the first pump module, and in a process in which the target optical combining/splitting module is configured to receive the first pump optical signal from the target pump module, the first optical combining/splitting module is configured to receive the first pump optical signal from the first pump module; in a process in which the first optical combining/splitting module is configured to couple the first optical signal to the first gain fiber core, the first optical combining/splitting module is configured to multiplex the first optical signal and the first pump optical signal to obtain a first multiplexed optical signal, and the first optical combining/splitting module is configured to couple the first multiplexed optical signal to the first gain fiber core; and in a process in which the first gain fiber core is configured to amplify the optical power of the first optical signal under the action of the first pump optical signal to obtain the second optical signal, the first gain fiber core is configured to perform forward pumping on the first optical signal based on the first pump optical signal to obtain the second optical signal.

In this implementation, the first gain fiber core performs forward pumping on the first optical signal for optical power amplification, so that noise of the optical fiber amplifier is effectively lowered when the optical power of the first optical signal is amplified.

According to the first aspect, in an optional implementation, in a process in which the target optical combining/splitting module is configured to receive the second pump optical signal, the first optical combining/splitting module is configured to receive the second pump optical signal from the first pump module; and
in a process in which the second gain fiber core is configured to amplify the optical power of the second optical signal under the action of the second pump optical signal to obtain the amplified second optical signal, the second gain fiber core is configured to perform backward pumping on the second optical signal based on the second pump optical signal to obtain the amplified second optical signal.

In this implementation, the second gain fiber core performs backward pumping on the second optical signal for optical power amplification, so that pumping efficiency is effectively improved when the optical power of the second optical signal is amplified.

According to the first aspect, in an optional implementation, the second optical combining/splitting module is connected to the first optical combining/splitting module, and in a process in which the target optical combining/splitting module is configured to receive the second pump optical signal from the target pump module, the first optical combining/splitting module is configured to receive the second pump optical signal from the first pump module; in a process in which the second optical combining/splitting module is configured to couple the second optical signal to the second gain fiber core, the second optical combining/splitting module is configured to couple the second optical signal to the first optical combining/splitting module, the first optical combining/splitting module is configured to multiplex the second optical signal and the second pump optical signal to obtain a second multiplexed optical signal, and the first optical combining/splitting module is configured to couple the second multiplexed optical signal to the second gain fiber core; and in a process in which the second gain fiber core is configured to amplify the optical power of the second optical signal under the action of the second pump optical signal to obtain the amplified second optical signal, the second gain fiber core is configured to perform forward pumping on the second optical signal based on the second pump optical signal to obtain the amplified second optical signal.

In this implementation, the second gain fiber core performs forward pumping on the second optical signal for optical power amplification, so that noise of the optical fiber amplifier is effectively lowered when the optical power of the second optical signal is amplified.

According to the first aspect, in an optional implementation, the target pump module includes a second pump module, the target optical combining/splitting module includes the second optical combining/splitting module, the second optical combining/splitting module is connected to the second pump module, and in a process in which the target optical combining/splitting module is configured to receive the first pump optical signal from the target pump module, the second optical combining/splitting module is configured to receive the first pump optical signal from the second pump module; and in a process in which the first gain fiber core is configured to amplify the optical power of the first optical signal under the action of the first pump optical signal to obtain the second optical signal, the first gain fiber core is configured to perform backward pumping on the first optical signal based on the first pump optical signal to obtain the second optical signal.

In this implementation, the first gain fiber core performs forward pumping on the first optical signal for optical power amplification, so that pumping efficiency is effectively improved when the optical power of the first optical signal is amplified.

According to the first aspect, in an optional implementation, in a process in which the target optical combining/splitting module is configured to receive the second pump optical signal, the second optical combining/splitting module is configured to receive the second pump optical signal from the second pump module; in a process in which the second optical combining/splitting module is configured to couple the second optical signal to the second gain fiber core, the second optical combining/splitting module is configured to multiplex the second optical signal and the second pump optical signal to obtain a third multiplexed optical signal, and the second optical combining/splitting module is configured to couple the third multiplexed optical signal to the second gain fiber core; and in a process in which the second gain fiber core is configured to amplify the optical power of the second optical signal under the action of the second pump optical signal to obtain the amplified second optical signal, the second gain fiber core is configured to perform forward pumping on the second optical signal based on the second pump optical signal to obtain the amplified second optical signal.

In this implementation, the second gain fiber core performs forward pumping on the second optical signal for optical power amplification, so that noise of the optical fiber amplifier is effectively lowered when the optical power of the second optical signal is amplified.

According to the first aspect, in an optional implementation, the first optical combining/splitting module is connected to the second optical combining/splitting module, and in a process in which the target optical combining/splitting module is configured to receive the second pump optical signal, the second optical combining/splitting module is configured to receive the second pump optical signal from the second pump module; in a process in which the second optical combining/splitting module is configured to couple the second optical signal to the second gain fiber core, the second optical combining/splitting module is configured to couple the second optical signal to the first optical combining/splitting module, and the first optical combining/splitting module is configured to couple the second optical signal to the second gain fiber core; and in a process in which the second gain fiber core is configured to amplify the optical power of the second optical signal under the action of the second pump optical signal to obtain the amplified second optical signal, the second gain fiber core is configured to perform backward pumping on the second optical signal based on the second pump optical signal to obtain the amplified second optical signal.

In this implementation, the second gain fiber core performs backward pumping on the second optical signal for optical power amplification, so that pumping efficiency is effectively improved when the second optical signal is amplified.

According to the first aspect, in an optional implementation, the target pump module further includes a second pump module, the target optical combining/splitting module further includes the second optical combining/splitting module, and the second optical combining/splitting module is connected to the second pump module; in a process in which the target optical combining/splitting module is configured to receive the second pump optical signal from the target pump module, the second optical combining/splitting module is configured to receive the second pump optical signal from the second pump module; in a process in which the second optical combining/splitting module is configured to couple the second optical signal to the second gain fiber core, the second optical combining/splitting module is configured to multiplex the second optical signal and the second pump optical signal to obtain a fourth multiplexed optical signal, and the second optical combining/splitting module is configured to couple the fourth multiplexed optical signal to the second gain fiber core; and in a process in which the second gain fiber core is configured to amplify the optical power of the second optical signal under the action of the second pump optical signal to obtain the amplified second optical signal, the second gain fiber core is configured to perform forward pumping on the second optical signal based on the second pump optical signal to obtain the amplified second optical signal.

In this implementation, the first pump module and the second pump module respectively provide the first pump optical signal and the second pump optical signal for the first gain fiber core and the second gain fiber core, to ensure that the first pump optical signal can accurately enter the first gain fiber core and the second pump optical signal can accurately enter the second gain fiber core.

According to the first aspect, in an optional implementation, the first optical combining/splitting module is connected to the second optical combining/splitting module, the target pump module further includes a second pump module, the target optical combining/splitting module further includes the second optical combining/splitting module, and the second optical combining/splitting module is connected to the second pump module; in a process in which the target optical combining/splitting module is configured to receive the second pump optical signal from the target pump module, the second optical combining/splitting module is configured to receive the second pump optical signal from the second pump module; in a process in which the second optical combining/splitting module is configured to couple the second optical signal to the second gain fiber core, the second optical combining/splitting module is configured to couple the second optical signal to the first optical combining/splitting module, and the first optical combining/splitting module is configured to couple the second optical signal to the second gain fiber core; and in a process in which the second gain fiber core is configured to amplify the optical power of the second optical signal under the action of the second pump optical signal to obtain the amplified second optical signal, the second gain fiber core is configured to perform backward pumping on the second optical signal based on the second pump optical signal to obtain the amplified second optical signal.

In this implementation, the second gain fiber core performs backward pumping on the second optical signal for optical power amplification, so that pumping efficiency is effectively improved when the second optical signal is amplified.

According to the first aspect, in an optional implementation, the second optical combining/splitting module is further configured to demultiplex the second optical signal to obtain a first band optical signal and a second band optical signal, and in the process in which the second optical combining/splitting module is configured to couple the second optical signal to the second gain fiber core, the second optical combining/splitting module is configured to couple the second band optical signal to the second gain fiber core; in the process in which the second gain fiber core is configured to amplify the optical power of the second optical signal under the action of the second pump optical signal to obtain the amplified second optical signal, the second gain fiber core is configured to amplify optical power of the second band optical signal under the action of the second pump optical signal to obtain an amplified second band optical signal, and is configured to couple the amplified second band optical signal to the second optical combining/splitting module; and the second optical combining/splitting module is configured to multiplex the amplified second band optical signal and the first band optical signal to obtain a third optical signal.

In this implementation, the optical fiber amplifier splits the second optical signal into the first band optical signal and the second band optical signal, and independently amplifies the optical power of the second band optical signal through the second gain fiber core. During amplification, there is no need to multiplex and demultiplex the first optical signal for a plurality of times. This effectively reduces an insertion loss of the optical fiber amplifier and alleviates amplification noise figure degradation.

According to the first aspect, in an optional implementation, the optical fiber amplifier further includes a fan-in/fan-out device, the fan-in/fan-out device is connected between the multi-core gain module and the second optical combining/splitting module, and the fan-in/fan-out device is connected to the second optical combining/splitting module through a first connection fiber core. In a process in which the first gain fiber core is configured to couple the second optical signal to the second optical combining/splitting module, the fan-in/fan-out device is configured to fan out the second optical signal to the first connection fiber core.

In this implementation, conversion between an optical signal whose transmission is performed by the multi-core gain module based on a plurality of cores and an optical signal whose transmission is performed by the second optical combining/splitting module based on a single core can be implemented through the fan-in/fan-out device.

According to the first aspect, in an optional implementation, the fan-in/fan-out device is further connected to the second optical combining/splitting module through a second connection fiber core, and in a process in which the second gain fiber core is configured to couple the amplified second band optical signal to the second optical combining/splitting module, the fan-in/fan-out device is configured to fan out the amplified second band optical signal to the second connection fiber core.

According to the first aspect, in an optional implementation, the fan-in/fan-out device is further connected to the second optical combining/splitting module through a second connection fiber core, and in a process in which the second optical combining/splitting module is configured to couple the second band optical signal to the second gain fiber core, the second optical combining/splitting module is configured to couple the second band optical signal to the second connection fiber core, and the fan-in/fan-out device is configured to fan in the second band optical signal to the second gain fiber core.

According to the first aspect, in an optional implementation, the multi-core gain module further includes a third gain fiber core, and the second optical combining/splitting module is further configured to demultiplex the second optical signal to obtain a first band optical signal and a second band optical signal, where the third gain fiber core is configured to amplify optical power of the first band optical signal and optical power of the second band optical signal, and the second gain fiber core and the third gain fiber core are jointly configured to amplify the optical power of the second band optical signal.

According to the first aspect, in an optional implementation, the first optical combining/splitting module is connected to the second optical combining/splitting module, and in the process in which the second optical combining/splitting module is configured to couple the second optical signal to the second gain fiber core, the second optical combining/splitting module is configured to couple the second band optical signal to the second gain fiber core; in the process in which the second gain fiber core is configured to amplify the optical power of the second optical signal to obtain the amplified second optical signal, the second gain fiber core is configured to amplify the optical power of the second band optical signal to obtain a first amplified optical signal, and the second gain fiber core is configured to couple the first amplified optical signal to the third gain fiber core; and the third gain fiber core is configured to amplify optical power of the first amplified optical signal to obtain a second amplified optical signal.

In this implementation, the multi-core gain module can amplify the optical power of the first band optical signal and the optical power of the first amplified optical signal again through the third gain fiber core. This increases a gain and enhances integration.

According to the first aspect, in an optional implementation, the first optical combining/splitting module is connected to the second optical combining/splitting module; and in a process in which the second gain fiber core is configured to couple the first amplified optical signal to the third gain fiber core, the second gain fiber core is configured to couple the first amplified optical signal to the second optical combining/splitting module, the second optical combining/splitting module is configured to couple the first amplified optical signal to the first optical combining/splitting module, and the first optical combining/splitting module is configured to couple the first amplified optical signal to the third gain fiber core; or the second gain fiber core is configured to couple the first amplified optical signal to the second optical combining/splitting module, and the second optical combining/splitting module is configured to couple the first amplified optical signal to the third gain fiber core.

According to a second aspect of this application, an optical power amplification method is provided. The method is applied to an optical fiber amplifier. The optical fiber amplifier includes a first optical combining/splitting module, a multi-core gain module, and a second optical combining/splitting module, the multi-core gain module includes at least a first gain fiber core and a second gain fiber core, and the method includes: coupling a first optical signal to the first gain fiber core through the first optical combining/splitting module; amplifying, through the first gain fiber core, optical power of the first optical signal to obtain a second optical signal, and coupling the second optical signal to the second optical combining/splitting module; coupling the second optical signal to the second gain fiber core through the second optical combining/splitting module; and amplifying, through the second gain fiber core, optical power of the second optical signal to obtain an amplified second optical signal, where the first gain fiber core and the second gain fiber core separately perform optical power amplification based on different pump optical signals.

For beneficial effects of this aspect, refer to the first aspect. Details are not described again.

According to the second aspect, in an optional implementation, the optical fiber amplifier further includes a target pump module, and before the amplifying, through the first gain fiber core, the optical power of the first optical signal to obtain the second optical signal, the method further includes: receiving a first pump optical signal and a second pump optical signal from the target pump module through a target optical combining/splitting module, where the target optical combining/splitting module is at least either of the first optical combining/splitting module or the second optical combining/splitting module; and coupling, through the target optical combining/splitting module, the first pump optical signal to the first gain fiber core, and coupling the second pump optical signal to the second gain fiber core; the amplifying, through the first gain fiber core, the optical power of the first optical signal to obtain the second optical signal includes: amplifying, through the first gain fiber core, the optical power of the first optical signal under an action of the first pump optical signal to obtain the second optical signal; and the amplifying, through the second gain fiber core, the optical power of the second optical signal to obtain the amplified second optical signal includes: amplifying, through the second gain fiber core, the optical power of the second optical signal under an action of the second pump optical signal to obtain the amplified second optical signal.

According to the second aspect, in an optional implementation, the target pump module includes a second pump module, the target optical combining/splitting module includes the second optical combining/splitting module, and the second optical combining/splitting module is connected to the second pump module; the receiving the first pump optical signal from the target pump module through the target optical combining/splitting module includes: receiving the first pump optical signal from the second pump module through the second optical combining/splitting module; and the amplifying, through the first gain fiber core, the optical power of the first optical signal under the action of the first pump optical signal to obtain the second optical signal includes: performing backward pumping on the first optical signal through the first gain fiber core based on the first pump optical signal to obtain the second optical signal.

According to the second aspect, in an optional implementation, the target pump module further includes a second pump module, the target optical combining/splitting module further includes the second optical combining/splitting module, and the second optical combining/splitting module is connected to the second pump module. The receiving the second pump optical signal from the target pump module through the target optical combining/splitting module includes: receiving the second pump optical signal from the second pump module through the second optical combining/splitting module. The coupling the second optical signal to the second gain fiber core through the second optical combining/splitting module includes: coupling the second optical signal to the first optical combining/splitting module through the second optical combining/splitting module; and coupling the second optical signal to the second gain fiber core through the first optical combining/splitting module. The amplifying, through the second gain fiber core, the optical power of the second optical signal under the action of the second pump optical signal to obtain the amplified second optical signal includes: performing backward pumping on the second optical signal through the second gain fiber core based on the second pump optical signal to obtain the amplified second optical signal.

According to the second aspect, in an optional implementation, after the first gain fiber core amplifies the optical power of the first optical signal under the action of the first pump optical signal to obtain the second optical signal, and couples the second optical signal to the second optical combining/splitting module, the method further includes: demultiplexing, through the second optical combining/splitting module, the second optical signal to obtain a first band optical signal and a second band optical signal. The coupling the second optical signal to the second gain fiber core through the second optical combining/splitting module includes: coupling the second band optical signal to the second gain fiber core through the second optical combining/splitting module. The amplifying, through the second gain fiber core, the optical power of the second optical signal under the action of the second pump optical signal to obtain the amplified second optical signal includes: amplifying, through the second gain fiber core, optical power of the second band optical signal under the action of the second pump optical signal to obtain an amplified second band optical signal, and coupling the amplified second band optical signal to the second optical combining/splitting module; and multiplexing, through the second optical combining/splitting module, the amplified second band optical signal and the first band optical signal to obtain a third optical signal.

According to the second aspect, in an optional implementation, the multi-core gain module further includes a third gain fiber core. After the first gain fiber core amplifies the optical power of the first optical signal under the action of the first pump optical signal to obtain the second optical signal, and couples the second optical signal to the second optical combining/splitting module, the method further includes: demultiplexing, through the second optical combining/splitting module, the second optical signal to obtain a first band optical signal and a second band optical signal. The amplifying, through the second gain fiber core, the optical power of the second optical signal under the action of the second pump optical signal to obtain the amplified second optical signal includes: amplifying, through the third gain fiber core, optical power of the first band optical signal and optical power of the second band optical signal; and amplifying the optical power of the second band optical signal through both the second gain fiber core and the third gain fiber core.

According to a third aspect of this application, a sending device is provided. The sending device includes a processor, a transmitter, and an optical fiber amplifier. The transmitter is connected to the processor and the optical fiber amplifier, and the optical fiber amplifier is as described in the first aspect. The processor is configured to send an electrical signal to the transmitter. The transmitter is configured to obtain a first optical signal based on the electrical signal, and send the first optical signal to the optical fiber amplifier. The optical fiber amplifier is configured to amplify optical power of the first optical signal to obtain the amplified second optical signal.

According to a fourth aspect of this application, a receiving device is provided. The receiving device includes a processor, a receiver, and an optical fiber amplifier, the receiver is connected to the processor and the optical fiber amplifier, and the optical fiber amplifier is as described in the first aspect. The optical fiber amplifier is configured to amplify optical power of a first optical signal to obtain the amplified second optical signal. The receiver is configured to obtain an electrical signal based on the amplified second optical signal. The processor is configured to receive the electrical signal.

According to a fifth aspect of this application, an optical communication system is provided. The optical communication system includes a sending device, a receiving device, and at least one optical fiber amplifier connected between the sending device and the receiving device, and the optical fiber amplifier is as described in the first aspect.

### BRIEF DESCRIPTION OF DRAWINGS

FIG. 1 is a diagram of a structure of an existing optical fiber amplifier;
FIG. 2 is a diagram of a structure of an optical communication system;
FIG. 3 is an example diagram of a structure of a first embodiment of an optical fiber amplifier according to this application;
FIG. 4a is an example diagram of a structure of a first embodiment of a first optical combining/splitting module shown in FIG. 3;
FIG. 4b is an example diagram of a structure of a second embodiment of a first optical combining/splitting module shown in FIG. 3;
FIG. 4c is an example diagram of a structure of a third embodiment of a first optical combining/splitting module shown in FIG. 3;
FIG. 4d is an example diagram of a structure of a second embodiment of an optical fiber amplifier according to this application;
FIG. 5 is an example diagram of a structure of a third embodiment of an optical fiber amplifier according to this application;
FIG. 6 is an example diagram of a structure of a fourth embodiment of an optical fiber amplifier according to this application;
FIG. 7a is an example diagram of a structure of a first embodiment of a second optical combining/splitting module shown in FIG. 6;
FIG. 7b is an example diagram of a structure of a second embodiment of a second optical combining/splitting module shown in FIG. 6;
FIG. 7c is an example diagram of a structure of a third embodiment of a second optical combining/splitting module shown in FIG. 6
FIG. 8 is an example diagram of a structure of a fifth embodiment of an optical fiber amplifier according to this application;
FIG. 9 is an example diagram of a structure of an embodiment of a second optical combining/splitting module shown in FIG. 8;
FIG. 10 is an example diagram of a structure of a sixth embodiment of an optical fiber amplifier according to this application;
FIG. 11 is an example diagram of a structure of a seventh embodiment of an optical fiber amplifier according to this application;
FIG. 12a is an example diagram of a structure of a first embodiment of a first optical combining/splitting module shown in FIG. 11;
FIG. 12b is an example diagram of a structure of a second embodiment of a first optical combining/splitting module shown in FIG. 11;
FIG. 12c is an example diagram of a structure of a third embodiment of a first optical combining/splitting module shown in FIG. 11;
FIG. 13a is an example diagram of a structure of a first embodiment of a second optical combining/splitting module shown in FIG. 11;
FIG. 13b is an example diagram of a structure of a second embodiment of a second optical combining/splitting module shown in FIG. 11;
FIG. 14 is an example diagram of a structure of an eighth embodiment of an optical fiber amplifier according to this application;
FIG. 15 is a flowchart of steps of a first embodiment of an optical power amplification method according to this application;
FIG. 16 is a flowchart of steps of a second embodiment of an optical power amplification method according to this application;
FIG. 17 is a flowchart of steps of a third embodiment of an optical power amplification method according to this application;
FIG. 18 is a flowchart of steps of a fourth embodiment of an optical power amplification method according to this application;
FIG. 19 is a flowchart of steps of a fifth embodiment of an optical power amplification method according to this application; and
FIG. 20 is an example diagram of a structure of an embodiment of a communication device according to this application.

### DESCRIPTION OF EMBODIMENTS

The following clearly describes technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

An optical fiber amplifier provided in this application is used in an optical communication system. For a structure of the optical communication system, refer to FIG. 2. FIG. 2 is a diagram of a structure of an optical communication system. The optical communication system shown in FIG. 2 includes a sending device 201 and a receiving device 202. A plurality of optical fiber amplifiers 203 are connected between the sending device 201 and the receiving device 202. A specific quantity of the optical fiber amplifiers 203 is not limited in this example. The optical fiber amplifier 203 is configured to receive an optical signal from the sending device 201, and amplify optical power of the optical signal to output an amplified optical signal. Amplification performed by the optical fiber amplifier on the optical signal helps increase a transmission distance of the optical signal. A type of a network in which the optical communication system is used is not limited in this example. For example, the optical communication system may be used in a passive optical network (passive optical network, PON), an optical transport network (optical transport network, OTN), a data center, or an industrial optical network. A sending device 201 in this example may be a router (Router) or a switch (Switch). For descriptions of a device type of the receiving device 202, refer to the descriptions of the sending device 201. Details are not described again.

The optical fiber amplifier provided in this application is configured to enhance integration and improve pumping efficiency of the optical fiber amplifier, and can independently adjust a gain of optical power of each optical signal. The structure of the optical fiber amplifier is described below with reference to specific embodiments.

### Embodiment 1

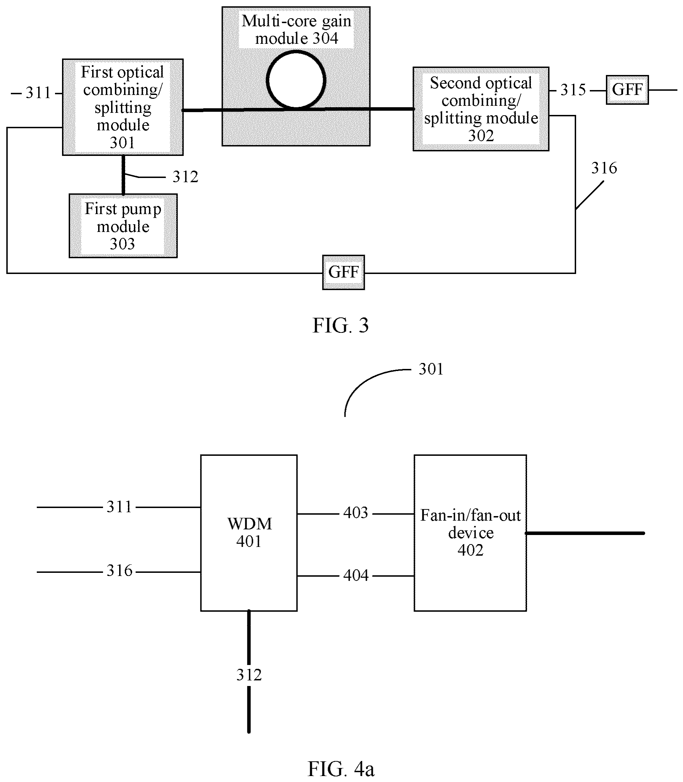

FIG. 3 is an example diagram of a structure of a first embodiment of an optical fiber amplifier according to this application. The optical fiber amplifier shown in this embodiment specifically includes a first optical combining/splitting module 301, a second optical combining/splitting module 302, a target pump module, and a multi-core gain module 304. A target optical combining/splitting module is connected to the target pump module. In this embodiment, for example, the target pump module includes only one first pump module 303. In this case, the target optical combining/splitting module is the first optical combining/splitting module 301. The multi-core gain module 304 is in a form of a multi-core optical fiber. That the multi-core gain module 304 is in the form of the multi-core optical fiber means that the multi-core gain module 304 includes two or more gain fiber cores, and the plurality of gain fiber cores may be packaged in a same cladding. For another example, the plurality of gain fiber cores included in the multi-core gain module 304 may be packaged in two or more claddings, and at least one gain fiber core is packaged in each cladding. A quantity of the gain fiber cores included in the multi-core gain module 304 is not limited in this embodiment, provided that the multi-core gain module 304 includes at least two gain fiber cores. The multi-core gain module 304 has a first connection end and a second connection end. The first connection end of the multi-core gain module 304 is connected to the first optical combining/splitting module 301, and the second connection end of the multi-core gain module 304 is connected to the second optical combining/splitting module 302. It may be understood that the multi-core gain module 304 shown in this embodiment is connected between the first optical combining/splitting module 301 and the second optical combining/splitting module 302.

A first end of the first optical combining/splitting module 301 is connected to a multi-core optical fiber. For descriptions of a form of the multi-core optical fiber, refer to the descriptions of the plurality of fiber cores included in the multi-core gain module 304. Details are not described again. The multi-core optical fiber connected to the first end of the first optical combining/splitting module 301 includes a plurality of fiber cores. Specifically, the multi-core optical fiber connected to the first end of the first optical combining/splitting module 301 includes a fiber core 311 and a fiber core 316, and the fiber core 311 is configured to receive a to-be-amplified first optical signal. For example, in an example shown in FIG. 2, a fiber core 311 of the optical fiber amplifier 203 is connected to the sending device 201. In this case, the optical fiber amplifier 203 receives a first optical signal from the sending device 201 through the fiber core 311, and the optical fiber amplifier 203 is configured to amplify optical power of the first optical signal. A quantity of fiber cores 311 connected to the first optical combining/splitting module 301 is not limited in this embodiment.

For example, the first pump module 303 shown in this embodiment is configured to generate two pump optical signals, that is, the first pump module 303 generates a first pump optical signal and a second pump optical signal. A quantity of pump optical signals generated by the first pump module 303 is not limited in this embodiment. The first pump module 303 shown in this embodiment may include a plurality of discrete pump lasers. For example, the first pump module 303 includes a first pump laser configured to generate the first pump optical signal and a second pump laser configured to generate the second pump optical signal. For another example, the first pump module 303 includes an array in which a plurality of dies are packaged, and each die is configured to generate one pump optical signal. For another example, the first pump module 303 may include one die, and the die is configured to generate the first pump optical signal and the second pump optical signal.

The first optical combining/splitting module 301 and the first pump module 303 are connected through a multi-core optical fiber 312. The first pump optical signal generated by the first pump module 303 is coupled to the first optical combining/splitting module 301 through the multi-core optical fiber 312. "Coupling" may be understood as alignment or import. The second pump optical signal is also coupled to the first optical combining/splitting module 301 through the multi-core optical fiber 312. The first optical combining/splitting module 301 is configured to multiplex the first optical signal received through the fiber core 311 and the first pump optical signal received through the multi-core optical fiber 312, to obtain a first multiplexed optical signal.

The multi-core gain module 304 shown in this embodiment includes at least a first gain fiber core and a second gain fiber core. Specifically, the first gain fiber core may be implemented by a rare earth-doped fiber (for example, an erbium-doped fiber or a thulium-doped fiber), a Raman fiber, a semiconductor, or the like. Details are not described in this embodiment. It may be understood that, when the first multiplexed optical signal is coupled to the first gain fiber core, the first gain fiber core amplifies the optical power of the first optical signal under an action of the first pump optical signal to obtain a second optical signal. It may be understood that the first optical combining/splitting module 401 shown in this embodiment can couple, to the multi-core gain module 304 for transmission, the first optical signal whose transmission is performed through a single core. In the multi-core gain module 304 shown in this embodiment, the optical power of the first optical signal is amplified through forward pumping. The forward pumping means that the first pump module 303 is located in front of the multi-core gain module 304 in a transmission direction of the first optical signal. For another example, in the multi-core gain module 304, the transmission direction of the first optical signal is consistent with a transmission direction of the first pump optical signal. Optical power amplification performed through forward pumping effectively lowers noise of the optical fiber amplifier. The first pump optical signal can provide energy for the first gain fiber core, and under the action of the first pump optical signal, the first gain fiber core is configured to amplify the optical power of the first optical signal to obtain the second optical signal.

Because the multi-core gain module 304 is connected to the second optical combining/splitting module 302, the first gain fiber core can couple the second optical signal to the second optical combining/splitting module 302. The second optical combining/splitting module 302 is connected to two fiber cores, namely, a fiber core 315 and the fiber core 316. The fiber core 316 is further connected to the first optical combining/splitting module 301. It may be understood as that the multi-core optical fiber connected to the first optical combining/splitting module 301 further includes the fiber core 316. The second optical combining/splitting module 302 outputs the second optical signal to the fiber core 316, and the second optical signal is coupled to the first optical combining/splitting module 301 again through the fiber core 316. It may be understood that the second optical combining/splitting module 302 can couple, to the single core 316 for transmission, the second optical signal whose transmission is performed through a plurality of cores.

It can be learned from the foregoing descriptions that the first pump module 303 further generates the second pump optical signal, and the second pump optical signal is used to amplify optical power of the second optical signal. The second pump optical signal is coupled to the first optical combining/splitting module 301 through the multi-core optical fiber 312. The first optical combining/splitting module 301 is configured to multiplex the second optical signal received through the fiber core 316 and the second pump optical signal received through the multi-core optical fiber 312, to obtain a second multiplexed optical signal.

In the multi-core gain module 304, the optical power of the second optical signal is amplified through forward pumping. For descriptions of the forward pumping for the second optical signal, refer to the foregoing descriptions of the forward pumping for the first optical signal. Details are not described again. The multi-core gain module 304 includes a plurality of gain fiber cores, and transmission of the second multiplexed optical signal is performed through the second gain fiber core included in the multi-core gain module 304. In the multi-core gain module 304, the first gain fiber core for transmission of the first multiplexed optical signal and the second gain fiber core for transmission of the second multiplexed optical signal are different from each other. For descriptions of the second gain fiber core, refer to the foregoing descriptions of the first gain fiber core. Details are not described again. It may be understood that, when the second multiplexed optical signal is coupled to the second gain fiber core of the multi-core gain module 304, the second gain fiber core amplifies the optical power of the second optical signal under an action of the second pump optical signal to obtain a third optical signal. The second gain fiber core of the multi-core gain module 304 couples the third optical signal to the second optical combining/splitting module 302, and the second optical combining/splitting module 302 couples the third optical signal to the fiber core 315, so that the third optical signal is output from the optical fiber amplifier through the fiber core 315. In this embodiment, for example, the third optical signal is output through the second optical combining/splitting module 302. For another example, the third optical signal may alternatively be output through the first optical combining/splitting module 301. This is not specifically limited.

Optionally, a gain flattening filter (gain flattening filter, GFF) may be connected to an optical path of the fiber core 316 shown in this embodiment. Specifically, the second optical signal received by the second optical combining/splitting module 302 is an optical signal whose optical power is amplified by the multi-core gain module 304. When amplifying the optical power, the multi-core gain module 304 introduces a gain difference to the second optical signal, and consequently, optical power distribution between bands included in the second optical signal is unequalized. The GFF connected to the optical path of the fiber core 316 can correct a gain curve (or referred to as a gain spectrum) corresponding to the second optical signal, and the gain curve that corresponds to the second optical signal and that is corrected by the GFF is in a flat state, so that optical power of each band included in the second optical signal is in an equalized state. The GFF shown in this embodiment may be implemented by a plurality of filters, for example, a thin film light-filtering filter, a long-period fiber grating band-filtering filter, or a chirped fiber Bragg grating filter. This is not specifically limited in this embodiment. A GFF may also be disposed on an optical path of the fiber core 315 shown in this embodiment, so that the GFF filters the third optical signal, and the optical fiber amplifier outputs the third optical signal filtered by the GFF.

To implement fiber core pumping, the first optical combining/splitting module 301 needs to multiplex the first optical signal and the first pump optical signal into the first multiplexed optical signal, and the first optical combining/splitting module 301 further needs to multiplex the second optical signal and the second pump optical signal into the second multiplexed optical signal. For better understanding, a specific structure of the first optical combining/splitting module 301 is described below.

FIG. 4a is an example diagram of a structure of a first embodiment of the first optical combining/splitting module shown in FIG. 3. The first optical combining/splitting module 301 includes a wavelength division multiplexer (wavelength division multiplexer, WDM) 401 and a fan-in/fan-out (fan-in/fan-out, FIFO) device 402.

The WDM 401 includes a first port and a second port. The first port is connected to the fiber core 311 to receive a first optical signal. The second port is connected to the fiber core 316 to receive a second optical signal. The WDM 401 is connected to the first pump module 303 through the multi-core optical fiber 312 to receive a first pump optical signal and a second pump optical signal. The WDM 401 is connected to the fan-in/fan-out device 402 through a first connection fiber core 403 and a second connection fiber core 404. A first multiplexed optical signal obtained by multiplexing the first optical signal and the first pump optical signal by the WDM 401 is coupled to the fan-in/fan-out device 402 through the first connection fiber core 403. A second multiplexed optical signal obtained by multiplexing the second optical signal and the second pump optical signal by the WDM 401 is coupled to the fan-in/fan-out device 402 through the second connection fiber core 404. The fan-in/fan-out device 402 is configured to fan in the first multiplexed optical signal to the first gain fiber core. The fan-in/fan-out device 402 is further configured to fan in the second multiplexed optical signal to the second gain fiber core. The fan-in/fan-out device 402 shown in this embodiment is an optical fiber splice, and functions to fan in an optical signal to a corresponding fiber core in the multi-core optical fiber for transmission. It should be understood that fan-in described above means that an optical signal whose transmission is performed through a single fiber core is coupled to the multi-core optical fiber for transmission, and in this case, under an action of the fan-in/fan-out device 402, transmission of the first multiplexed optical signal and transmission of the second multiplexed optical signal can be performed in different gain fiber cores included in the same multi-core gain module 304.

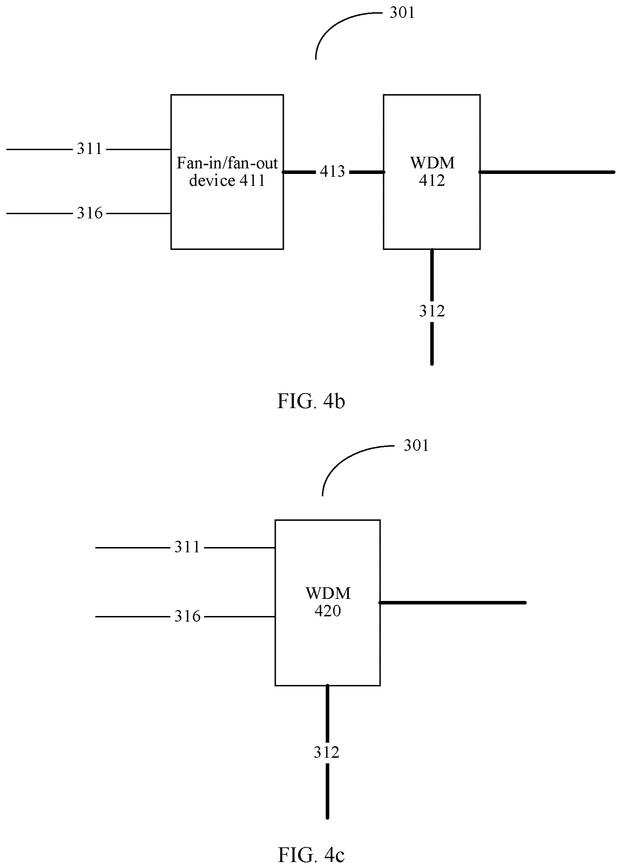

FIG. 4b is an example diagram of a structure of a second embodiment of the first optical combining/splitting module shown in FIG. 3. The first optical combining/splitting module 301 includes a fan-in/fan-out device 411 and a WDM 412.

The fan-in/fan-out device 411 includes a first port and a second port. The first port is connected to the fiber core 311 to receive a first optical signal. The second port is connected to the fiber core 316 to receive a second optical signal. The fan-in/fan-out device 411 is further connected to the WDM 412 through a multi-core optical fiber 413. The fan-in/fan-out device 411 is configured to fan in the first optical signal and the second optical signal to the multi-core optical fiber 413, to couple the first optical signal and the second optical signal to the WDM 412. For descriptions of fan-in of the fan-in/fan-out device, refer to the descriptions shown in FIG. 4a. Details are not described again. The WDM 412 is connected to the first pump module 303 through the multi-core optical fiber 312 to receive a first pump optical signal and a second pump optical signal. The WDM 412 multiplexes the first optical signal and the first pump optical signal to obtain a first multiplexed optical signal, and the WDM 412 multiplexes the second optical signal and the second pump optical signal to obtain a second multiplexed optical signal. The WDM 412 couples the first multiplexed optical signal and the second multiplexed optical signal to the multi-core gain module 304.

FIG. 4c is an example diagram of a structure of a third embodiment of the first optical combining/splitting module shown in FIG. 3. The first optical combining/splitting module 301 includes a WDM 420.

The WDM 420 includes a first port and a second port. The first port is connected to the fiber core 311 to receive a first optical signal. The second port is connected to the fiber core 316 to receive a second optical signal. The WDM 420 is connected to the first pump module 303 through the multi-core optical fiber 312 to receive a first pump optical signal and a second pump optical signal. The WDM 420 couples a first multiplexed optical signal and a second multiplexed optical signal to the multi-core gain module 304.

In the examples shown in FIG. 4a to FIG. 4c, a quantity of WDMs included in the first optical combining/splitting module 301 is not limited. In another example, the first optical combining/splitting module 301 may include two WDMs, where one WDM is configured to multiplex the first optical signal and the first pump optical signal, and the other WDM is configured to multiplex the second optical signal and the second pump optical signal.

The second optical combining/splitting module 302 shown in this embodiment is a fan-in/fan-out device, and the fan-in/fan-out device can implement fan-out of an optical signal. To be specific, when the second optical combining/splitting module 302 receives the second optical signal from the multi-core gain module 304, the fan-in/fan-out device is configured to fan out the second optical signal to the fiber core 316, so that the second optical combining/splitting module 302 returns the second optical signal to the first optical combining/splitting module 301 for optical power amplification again. When the second optical combining/splitting module 302 receives a third optical signal from the multi-core gain module 304, the fan-in/fan-out device is configured to fan out the third optical signal to the fiber core 315, to output the third optical signal from the optical amplifier through the fiber core 315. A function of fan-out is to fan out an optical signal to a single fiber core for transmission. It should be understood that fan-out described above means that an optical signal whose transmission is performed through a multi-core optical fiber is coupled to a single fiber core for transmission, and in this case, under an action of the fan-in/fan-out device, the second optical signal can be coupled to the single fiber core 316 for transmission.

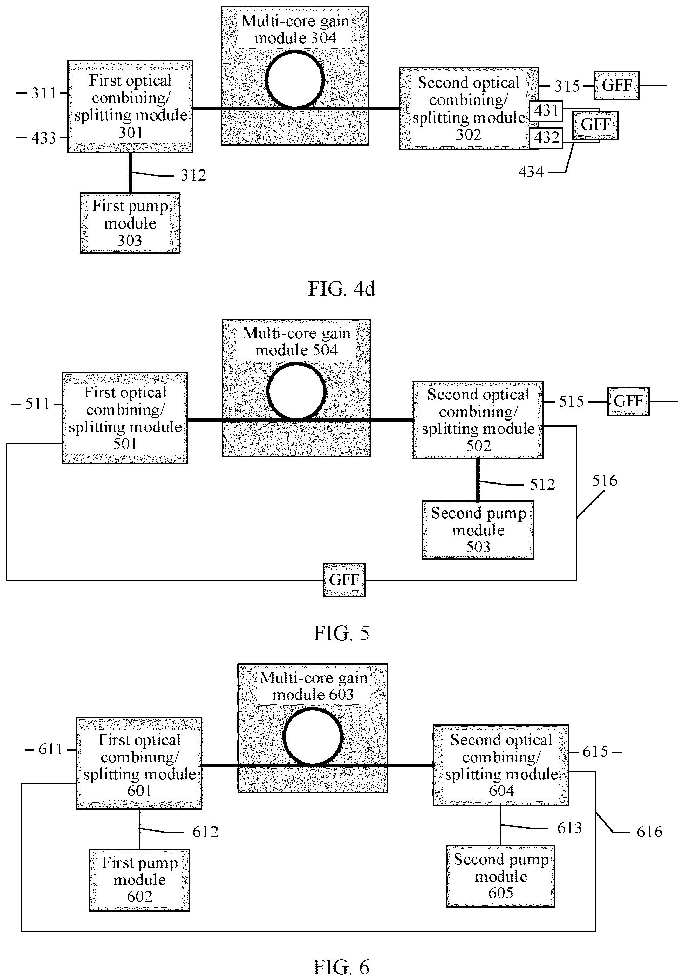

In the foregoing descriptions, an example in which the second optical signal emitted by the second optical combining/splitting module 302 is coupled to the first optical combining/splitting module 301 through the fiber core 316 is used. For example, FIG. 4d is an example diagram of a structure of a second embodiment of an optical fiber amplifier according to this application. The second optical combining/splitting module 302 in this example has a port 431 and a port 432, and the port 431 and the port 432 are connected through a fiber core 434. In this case, when the second optical combining/splitting module 302 receives a second optical signal from the multi-core gain module 304, the port 431 of the second optical combining/splitting module 302 outputs the second optical signal, and the second optical signal is transmitted to the port 432 along the fiber core 434. In this case, the second optical combining/splitting module 302 receives the second optical signal again through the port 432. The second optical combining/splitting module 302 couples the second optical signal to the second gain fiber core of the multi-core gain module 304. The first optical combining/splitting module 402 couples a second pump optical signal to the second gain fiber core, and in this case, the second gain fiber core performs backward pumping on the second optical signal based on the second pump optical signal to obtain a third optical signal. To be specific, the second gain fiber core performs backward pumping on the second optical signal based on the second pump optical signal from the first optical combining/splitting module 301, to obtain the third optical signal. The backward pumping means that the first pump module 303 is located behind the multi-core gain module 304 in a transmission direction of the second optical signal returned from the second optical combining/splitting module 302. For another example, in the second gain fiber core, the transmission direction of the second optical signal is opposite to a transmission direction of the second pump optical signal from the first pump module 303. The first optical combining/splitting module 301 outputs the third optical signal from the second gain fiber core through a fiber core 433 connected to the first optical combining/splitting module 301. A GFF may also be disposed on an optical path of the fiber core 434 shown in this embodiment. For descriptions of the GFF, refer to the foregoing embodiments. Details are not described again.

In this embodiment, the multi-core gain module 304 includes a plurality of gain fiber cores that separately perform optical power amplification, so that integration of the optical fiber amplifier is effectively enhanced. The optical fiber amplifier can implement fiber core pumping on the first optical signal based on the first pump optical signal, and fiber core pumping on the second optical signal based on the second pump optical signal. Specifically, the first optical combining/splitting module 301 can multiplex the first pump optical signal and the first optical signal into a same fiber core (namely, the first gain fiber core) in the multi-core gain module 304, so that fiber core pumping on the first optical signal based on the first pump optical signal is implemented. Similarly, the first optical combining/splitting module 301 can multiplex the second pump optical signal and the second optical signal into a same optical fiber (namely, the second gain fiber core) in the multi-core gain module 304, so that fiber core pumping on the second optical signal based on the second pump optical signal is implemented. It may be understood that, to implement fiber core pumping, the first optical combining/splitting module 301 needs to multiplex the first pump optical signal and the first optical signal, and the first optical combining/splitting module 301 needs to multiplex the second pump optical signal and the second optical signal. As shown in this embodiment, in the first gain fiber core, the first pump optical signal can be independently used for forward pumping on the first optical signal. Similarly, in the second gain fiber core, the second pump optical signal can be independently used for forward pumping on the second optical signal. The pumping process is based on fiber core pumping, and the first optical signal and the second optical signal are separately pumped. In addition, a gain of amplifying the optical power of the first optical signal can be adjusted by adjusting pump power of the first pump optical signal. Similarly, a gain of amplifying the optical power of the second optical signal can be adjusted by adjusting pump power of the second pump optical signal. In this way, a gain of each optical signal is independently adjusted. The pumping process shown in this embodiment is fiber core pumping instead of cladding pumping in the existing solution (as shown in FIG. 1), and therefore, energy of the pump optical signal entering a cladding is effectively reduced, and pumping efficiency is effectively improved.

The optical fiber amplifier provided in this embodiment can amplify the optical power of the first optical signal twice. For the first time, the first gain fiber core of the multi-core gain module 304 amplifies the optical power based on the first pump optical signal. For the second time, the second gain fiber core of the multi-core gain module 304 amplifies the optical power based on the second pump optical signal. The optical fiber amplifier shown in this embodiment returns the second optical signal to the first optical combining/splitting module 301 through the fiber core 316 to implement amplification for the second time, instead of returning the second optical signal through the reflector 103 in the existing solution (as shown in FIG. 1), but returns the second optical signal through the fiber core 316. This alleviates NF degradation.

In this embodiment, for example, the optical power of the first optical signal is amplified twice. For another example, the second optical combining/splitting module 302 may further couple the third optical signal to the multi-core gain module 304 (for a transmission process, refer to the descriptions of coupling the second optical signal to the multi-core gain module 304 by the second optical combining/splitting module), so that the multi-core gain module 304 can amplify optical power of the third optical signal again. A quantity of times of amplifying the optical power of the first optical signal is not limited in this embodiment. However, in the existing solution (as shown in FIG. 1), an optical signal is returned through the reflector 103 for optical power amplification. Because a reflection angle of the reflector 103 is limited, the optical signal can be amplified at most twice in the existing solution, and the optical power cannot be amplified for more than three times. It may be understood that the optical fiber amplifier provided in this embodiment may amplify the optical power of the optical signal for a plurality of times. This increases a gain of the optical signal and drops an NF.

### Embodiment 2

In Embodiment 1, for example, the optical amplifier includes only one first pump module, and the first pump module is connected to the first optical combining/splitting module. An optical amplifier shown in this embodiment also includes only one second pump module, and the second pump module is connected to a second optical combining/splitting module.

FIG. 5 is an example diagram of a structure of a third embodiment of an optical fiber amplifier according to this application. The optical fiber amplifier shown in this embodiment specifically includes a first optical combining/splitting module 501, a second optical combining/splitting module 502, a target pump module, and a multi-core gain module 504. A target optical combining/splitting module is connected to the target pump module. In this embodiment, for example, the target pump module includes only one second pump module 503. In this case, the second optical combining/splitting module 502 is connected to the second pump module 503. For descriptions of the multi-core gain module 504, refer to Embodiment 1. Details are not described again.

The first optical combining/splitting module 501 is connected to a fiber core 511 and a fiber core 516. The fiber core 511 is configured to receive a to-be-amplified first optical signal. The first optical combining/splitting module 501 couples the first optical signal to a first gain fiber core of the multi-core gain module 504. For example, the second pump module 503 is configured to generate two pump optical signals, that is, the second pump module 503 generates a first pump optical signal and a second pump optical signal. A quantity of pump optical signals generated by the second pump module 503 is not limited in this embodiment. For descriptions of a structure of the second pump module, refer to the descriptions of the first pump module in Embodiment 1. Details are not described again. The second optical combining/splitting module 502 and the second pump module 503 are connected through a multi-core optical fiber 512. The first pump optical signal generated by the second pump module 503 is coupled to the second optical combining/splitting module 502 through the multi-core optical fiber 512. The second optical combining/splitting module 502 is configured to couple the first pump optical signal to the first gain fiber core of the multi-core gain module 504. When the first gain fiber core receives the first optical signal and the first pump optical signal, the first gain fiber core performs backward pumping based on the first pump optical signal to obtain a second optical signal. For descriptions of the backward pumping, refer to Embodiment 1. Details are not described again.

Because the multi-core gain module 504 is connected to the first optical combining/splitting module 501, the first gain fiber core can couple the second optical signal to the first optical combining/splitting module 501. The first optical combining/splitting module 501 is connected to the fiber core 516, and the fiber core 516 is connected between the first optical combining/splitting module 501 and the second optical combining/splitting module 502. The second optical combining/splitting module 502 receives the second optical signal from the first optical combining/splitting module 501 through the fiber core 516. The second optical combining/splitting module 502 multiplexes the second optical signal and the second pump optical signal to obtain a third multiplexed optical signal. The second optical combining/splitting module 502 couples the third multiplexed optical signal to a second gain fiber core of the multi-core gain module 504. The second gain fiber core performs forward pumping on the second optical signal based on the second pump optical signal, to obtain a third optical signal. The second gain fiber core transmits the third optical signal to the first optical combining/splitting module 501, and the first optical combining/splitting module 501 is configured to output the third optical signal. Alternatively, the first optical combining/splitting module 501 transmits the third optical signal to the second optical combining/splitting module 502, so that a fiber core 515 of the second optical combining/splitting module 502 outputs the third optical signal.

In this embodiment, for example, optical power of the second optical signal is amplified through forward pumping. For another example, the second optical combining/splitting module 502 transmits the second optical signal to the first optical combining/splitting module 501, the first optical combining/splitting module 501 couples the second optical signal to the second gain fiber core, and the second optical combining/splitting module 502 couples the second pump optical signal to the second gain fiber core. In this case, the second gain fiber core in this example performs backward pumping on the second optical signal based on the second pump optical signal from the second optical combining/splitting module 502, to obtain the third optical signal.

A GFF may be disposed on an optical path of the fiber core 516 or an optical path of the fiber core 515 shown in this embodiment. For descriptions of the GFF, refer to Embodiment 1. Details are not described again. For descriptions of a structure of the second optical combining/splitting module 502 shown in this embodiment, refer to the descriptions of the structure of the first optical combining/splitting module shown in Embodiment 1. Details are not described again. For descriptions of a structure of the first optical combining/splitting module 501 shown in this embodiment, refer to the descriptions of the structure of the second optical combining/splitting module shown in Embodiment 1. Details are not described again. For descriptions of beneficial effects in this embodiment, refer to those shown in Embodiment 1. Details are not described again.

### Embodiment 3

In Embodiment 1 and Embodiment 2, the target pump module includes only one pump module. As shown in this embodiment, a target pump module includes two pump modules, namely, a first pump module and a second pump module; and a target optical combining/splitting module includes a first optical combining/splitting module connected to the first pump module and a second optical combining/splitting module connected to the second pump module. FIG. 6 is an example diagram of a structure of a fourth embodiment of an optical fiber amplifier according to this application. The optical fiber amplifier shown in this embodiment includes a first optical combining/splitting module 601, a first pump module 602, a multi-core gain module 603, a second pump module 605, and a second optical combining/splitting module 604. For descriptions of the first optical combining/splitting module 601, the first pump module 602, and the multi-core gain module 603, refer to Embodiment 1. Details are not described again. As shown in this embodiment, the first optical combining/splitting module 601 is connected to the first pump module 602 through a multi-core optical fiber 612, and the second optical combining/splitting module 604 is connected to the second pump module 605 through a multi-core optical fiber 613.

The first optical combining/splitting module 601 is configured to multiplex a first optical signal received through a fiber core 611 and a first pump optical signal received through the multi-core optical fiber 612, to obtain a first multiplexed optical signal. For descriptions of the fiber core 611 and the multi-core optical fiber 612, refer to Embodiment 1. Details are not described again. The first optical combining/splitting module 601 transmits the first multiplexed optical signal to a first gain fiber core of the multi-core gain module 603. When the first multiplexed optical signal is coupled to the first gain fiber core of the multi-core gain module 603, the first gain fiber core amplifies optical power of the first optical signal under an action of the first pump optical signal to obtain a second optical signal. For descriptions of amplifying the optical power of the first optical signal by the first gain fiber core, refer to Embodiment 1. Details are not described again.

The first gain fiber core of the multi-core gain module 603 transmits the second optical signal to the second optical combining/splitting module 604. The second pump module 605 is configured to generate a second pump optical signal, and the second pump optical signal is used to amplify optical power of the second optical signal. The second pump optical signal is coupled to the second optical combining/splitting module 604 through the multi-core optical fiber 613. The second optical combining/splitting module 604 is configured to multiplex the second optical signal from the multi-core gain module 603 and the second pump optical signal received through the multi-core optical fiber 613, to obtain a fourth multiplexed optical signal. The second optical combining/splitting module 604 couples the fourth multiplexed optical signal to the first optical combining/splitting module 601 through a fiber core 616. When receiving the fourth multiplexed optical signal through the fiber core 616, the first optical combining/splitting module 601 couples the fourth multiplexed optical signal to a second gain fiber core of the multi-core gain module 603. The second gain fiber core amplifies the optical power of the second optical signal under an action of the second pump optical signal to obtain a third optical signal. The multi-core gain module 603 couples the third optical signal to the second optical combining/splitting module 604, and the second optical combining/splitting module 604 couples the third optical signal to the fiber core 615, so that the third optical signal is output from the optical fiber amplifier through the fiber core 615.

In this embodiment, for example, the second optical signal is pumped based on the second pump optical signal from the second pump module 605. For another example, when receiving the fourth multiplexed optical signal from the second optical combining/splitting module 604, the first optical combining/splitting module 601 can further receive a second pump optical signal from the first pump module 602 through the multi-core optical fiber 612, multiplex the second pump optical signal from the first pump module 602 into the fourth multiplexed optical signal, and couple the fourth multiplexed optical signal obtained through multiplexing to the second gain fiber core. In this case, the second gain fiber core can pump the second optical signal based on the second pump optical signal from the first pump module 602 and the second pump optical signal from the second pump module 605. This effectively improves efficiency of pumping the second optical signal and alleviates NF degradation.

In this embodiment, for example, the second optical combining/splitting module 604 couples the fourth multiplexed optical signal to the first optical combining/splitting module 601 through the fiber core 616, and the first optical combining/splitting module 601 couples the fourth multiplexed optical signal to the second gain fiber core. For another example, the second optical combining/splitting module 604 may alternatively return the fourth multiplexed optical signal to the second gain fiber core directly (for details of the returning, refer to the descriptions of returning the second optical signal shown in FIG. 4d), so that the second gain fiber core amplifies optical power of the fourth multiplexed optical signal from the second optical combining/splitting module 604. In this example, the first optical combining/splitting module 601 may alternatively couple the second pump optical signal from the first pump module 602 to the second gain fiber core, and the second gain fiber core amplifies the optical power of the second optical signal based on the second pump optical signal from the first pump module 602 and the second pump optical signal from the second pump module 605. In addition, the second gain fiber core performs forward pumping on the second optical signal based on the second pump optical signal from the second pump module 605, and performs backward pumping on the second optical signal based on the second pump optical signal from the first pump module 602. In this example, the optical power of the second optical signal is amplified through forward pumping and backward pumping. This effectively improves pumping efficiency and alleviates NF degradation.

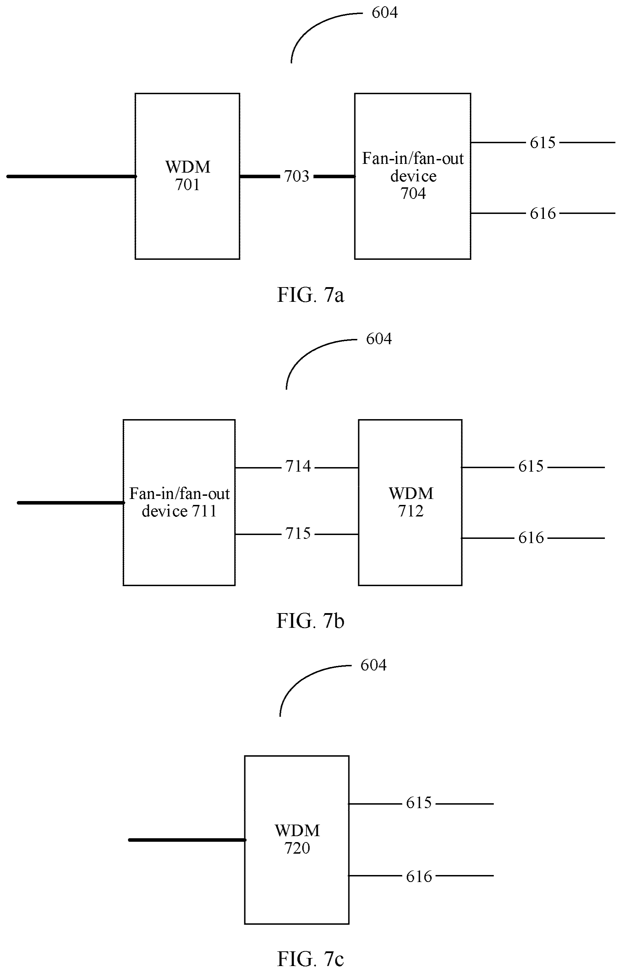

For descriptions of a structure of the first optical combining/splitting module 601 shown in this embodiment, refer to Embodiment 1. Details are not described again. For a structure of the second optical combining/splitting module 604 shown in this embodiment, refer to the following descriptions. FIG. 7a is an example diagram of a structure of a first embodiment of the second optical combining/splitting module shown in FIG. 6. The second optical combining/splitting module 604 includes a WDM 701 and a fan-in/fan-out device 704.

One end of the WDM 701 is connected to the multi-core gain module 603. The WDM 701 receives a second optical signal from the multi-core gain module 603. When receiving the second optical signal, the WDM 701 couples the second optical signal to a multi-core optical fiber 703. The fan-in/fan-out device 704 fans out the second optical signal to the fiber core 616, to return the second optical signal to the first optical combining/splitting module 601 for optical power amplification again. When receiving the third optical signal from the multi-core gain module 603, the WDM 701 couples the third optical signal to the multi-core optical fiber 703. The fan-in/fan-out device 704 fans out the third optical signal to the fiber core 615 for output of the third optical signal from the optical fiber amplifier.

FIG. 7b is an example diagram of a structure of a second embodiment of the second optical combining/splitting module shown in FIG. 6. The second optical combining/splitting module 604 includes a fan-in/fan-out device 711 and a WDM 712.

The fan-in/fan-out device 711 receives a second optical signal from the multi-core gain module 603. The fan-in/fan-out device 711 fans out the second optical signal to a fiber core 714. The fiber core 714 is connected between the fan-in/fan-out device 711 and the WDM 712. The WDM 712 receives the second optical signal through the fiber core 714, and couples the second optical signal to the fiber core 616, to return the second optical signal to the first optical combining/splitting module 601 for optical power amplification again. The fan-in/fan-out device 711 receives a third optical signal from the multi-core gain module 603. The fan-in/fan-out device 711 fans out the third optical signal to a fiber core 715. The fiber core 715 is connected between the fan-in/fan-out device 711 and the WDM 712. The WDM 712 receives the third optical signal through the fiber core 715, and couples the third optical signal to the fiber core 616 for output of the third optical signal from the optical fiber amplifier.

FIG. 7c is an example diagram of a structure of a third embodiment of the second optical combining/splitting module shown in FIG. 6. The second optical combining/splitting module 604 includes a WDM 720. The WDM 720 receives a second optical signal from the multi-core gain module 603. The WDM 720 couples the second optical signal to the fiber core 616, to return the second optical signal to the first optical combining/splitting module 601 for optical power amplification again. The WDM 720 receives a third optical signal from the multi-core gain module 603. The WDM 720 couples the third optical signal to the fiber core 616 for output of the third optical signal from the optical fiber amplifier.

In the examples shown in FIG. 7a to FIG. 7c, a quantity of WDMs included in the second optical combining/splitting module 604 is not limited.

The multi-core gain module shown in this embodiment can perform optical power amplification based on a pump optical signal from the first pump module and a pump optical signal from the second pump module. This effectively improves pumping efficiency and alleviates NF degradation.

### Embodiment 4

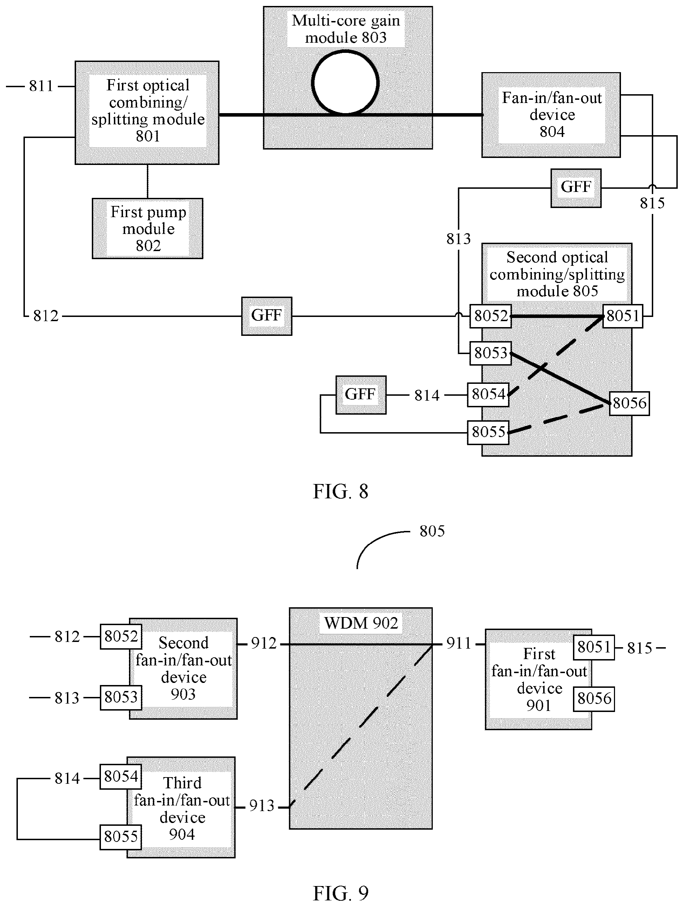

As a communication capacity of the optical communication system keeps increasing and a single-wavelength capacity approaches the Shannon limit, spectrum spreading becomes a current optimal choice. An optical fiber amplifier provided in this embodiment can amplify, for each band, optical power of an optical signal including a plurality of bands. FIG. 8 is an example diagram of a structure of a fifth embodiment of an optical fiber amplifier according to this application. The optical fiber amplifier shown in this embodiment includes a first optical combining/splitting module 801, a first pump module 802, a multi-core gain module 803, a fan-in/fan-out device 804, and a second optical combining/splitting module 805.

The first optical combining/splitting module 801 receives a first optical signal through a fiber core 811. The first optical combining/splitting module 801 receives a first pump optical signal from the first pump module 802. The first optical combining/splitting module 801 multiplexes the first optical signal and the first pump optical signal to obtain a first multiplexed optical signal. The first optical combining/splitting module 801 transmits the first multiplexed optical signal to a first gain fiber core of the multi-core gain module 803. The first gain fiber core of the multi-core gain module 803 is configured to amplify optical power of the first optical signal based on the first pump optical signal to obtain a second optical signal. For descriptions of a specific process, refer to Embodiment 1. Details are not described again.

The first gain fiber core of the multi-core gain module 803 transmits the second optical signal to the fan-in/fan-out device 804. The fan-in/fan-out device 804 fans out the second optical signal from the first gain fiber core to a first connection fiber core 815. The first connection fiber core 815 is connected between the fan-in/fan-out device 804 and a port 8051 of the second optical combining/splitting module 805. In this case, the second optical signal is coupled to the port 8051 of the second optical combining/splitting module 805 along the first connection fiber core 815. When receiving the second optical signal, the second optical combining/splitting module 805 demultiplexes the second optical signal into a first band optical signal and a second band optical signal. A wavelength range of the first band optical signal and a wavelength range of the second band optical signal are not limited in this embodiment. For example, the first band optical signal is in a C band (C band), and the second band optical signal is in L band (L band). For another example, alternatively, the second band optical signal may be in a C band, and the first band optical signal may be in an L band. The second optical combining/splitting module 805 couples the first band optical signal to a port 8054. The port 8054 and a port 8055 of the second optical combining/splitting module 805 are connected through a fiber core 814, and the first band optical signal output from the port 8054 is coupled to the port 8055 through the fiber core 814, so that the second optical combining/splitting module 805 receives the first band optical signal again through the port 8055.

A port 8052 of the second optical combining/splitting module 805 is connected to the first optical combining/splitting module 801 through a fiber core 812. The second optical combining/splitting module 805 transmits the second band optical signal to the first optical combining/splitting module 801 through the fiber core 812. The first optical combining/splitting module 801 receives a second pump optical signal from the first pump module 802. The first optical combining/splitting module 801 multiplexes the second band optical signal and the second pump optical signal to obtain a fifth multiplexed optical signal. The first optical combining/splitting module 801 transmits the fifth multiplexed optical signal to a second gain fiber core of the multi-core gain module 803. The second gain fiber core of the multi-core gain module 803 amplifies optical power of the second band optical signal based on the second pump optical signal to obtain an amplified second band optical signal. The second gain fiber core of the multi-core gain module 803 transmits the amplified second band optical signal to the fan-in/fan-out device 804. The fan-in/fan-out device 804 fans out the amplified second band optical signal to a second connection fiber core 813. The second connection fiber core 813 is connected between the fan-in/fan-out device 804 and a port 8053 of the second optical combining/splitting module 805. In this case, the amplified second band optical signal output by the second optical combining/splitting module 805 is coupled to the port 8053 through the second connection fiber core 813. The second optical combining/splitting module 805 multiplexes the first band optical signal received through the port 8055 and the amplified second band optical signal received through the port 8053, to obtain a third optical signal. The second optical combining/splitting module 805 couples the third optical signal to a port 8056, so that the third optical signal is output from the optical fiber amplifier.

In this embodiment, for example, the second optical combining/splitting module 805 is a WDM. In this case, the first connection fiber core 815 is for transmission of a dual-band combined optical signal (that is, a C band and an L band included in the second optical signal), and the port 8056 is for transmission of a dual-band combined optical signal (that is, a C band and an L band included in the third optical signal). The port 8052, the port 8053, the port 8054, and the port 8055 are for transmission of a single-band optical signal. The second optical combining/splitting module 805 shown in this embodiment may also be connected to a second pump module, and a pump optical signal emitted by the second pump module is used to amplify the optical power of the first optical signal and the optical power of the second band optical signal. For descriptions of a specific process, refer to Embodiment 2. Details are not described again.

For a structure of the second optical combining/splitting module 805 shown in this embodiment, refer to FIG. 9. FIG. 9 is an example diagram of a structure of an embodiment of the second optical combining/splitting module shown in FIG. 8.

The second optical combining/splitting module 805 shown in this embodiment includes a first fan-in/fan-out device 901, a WDM 902, a second fan-in/fan-out device 903, and a third fan-in/fan-out device 904. The first fan-in/fan-out device 901 is connected to the WDM 902, and the WDM 902 is further connected to the second fan-in/fan-out device 903 and the third fan-in/fan-out device 904. In addition, the first fan-in/fan-out device 901 is connected to the WDM 902 through a multi-core optical fiber 911, the second fan-in/fan-out device 903 is connected to the WDM 902 through a multi-core optical fiber 912, and the third fan-in/fan-out device 904 is connected to the WDM 902 through a multi-core optical fiber 913. The first fan-in/fan-out device 901 has a port 8051 and a port 8056, the second fan-in/fan-out device 903 has a port 8052 and a port 8053, and the third fan-in/fan-out device has a port 8054 and a port 8055. For descriptions of the ports, refer to FIG. 8. Details are not described again.

The first fan-in/fan-out device 901 receives a second optical signal through the port 8051, and fans in the second optical signal to the multi-core optical fiber 911. The WDM 902 demultiplexes the second optical signal from the multi-core optical fiber 911 to obtain a first band optical signal and a second band optical signal. The WDM 902 transmits the second band optical signal to the second fan-in/fan-out device 903 through the multi-core optical fiber 912. The second fan-in/fan-out device 903 fans out the second band optical signal to the fiber core 812 through the port 8052. The fan-in/fan-out device 804 fans out an amplified second band optical signal to the second connection fiber core 813. The second connection fiber core 813 is connected between the fan-in/fan-out device 804 and the second fan-in/fan-out device 903. After receiving the amplified second band optical signal through the port 8053, the second fan-in/fan-out device 903 fans in the amplified second band optical signal to the multi-core optical fiber 912.

The WDM 902 couples, to the third fan-in/fan-out device 904 through the multi-core optical fiber 913, the first band optical signal obtained through demultiplexing. The third fan-in/fan-out device 904 fans out the first band optical signal to the port 8054, and receives the first band optical signal through the port 8055. The third fan-in/fan-out device 904 fans in the first band optical signal to the multi-core optical fiber 913. The WDM 902 multiplexes the amplified second band optical signal received through the multi-core optical fiber 912 and the first band optical signal received through the multi-core optical fiber 913, to obtain a fifth multiplexed optical signal. The WDM 902 couples the fifth multiplexed optical signal to the multi-core optical fiber 911, and the first fan-in/fan-out device 901 fans out the fifth multiplexed optical signal to the port 8056. The structure of the second optical combining/splitting module shown in this example is used, so that a quantity of ports included in the WDM can be effectively reduced, thereby reducing structural complexity of the WDM.

The optical fiber amplifier shown in this embodiment may include at least one GFF. For example, one GFF is connected to an optical path of the fiber core 812, and the GFF is configured to filter the second band optical signal. For example, one GFF is connected to the optical path of the fiber core 812. For another example, two or more GFFs may be connected to the optical path of the fiber core 812, to filter the second band optical signal for a plurality of times. For another example, at least one GFF is connected to an optical path of the fiber core 814, and the GFF is configured to filter the first band optical signal. For another example, at least one GFF is connected to an optical path of the second connection fiber core 813, and the GFF is configured to filter the second optical signal. For descriptions of the GFF and GFF filtering, refer to Embodiment 1. Details are not described again.

In this embodiment, for example, the optical fiber amplifier amplifies optical power of a dual-band optical signal. For another example, the optical fiber amplifier may alternatively amplify optical power of an optical signal having more than two bands. For descriptions of a specific process, refer to this embodiment. Details are not described again. For descriptions of beneficial effects of the optical fiber amplifier shown in this embodiment, refer to Embodiment 1. Details are not described again. In addition, the optical fiber amplifier shown in this embodiment can amplify the optical power of the dual-band (C band and L band) optical signal while enhancing integration.

In an existing solution, to amplify the optical power of the dual-band optical signal, a plurality of amplification modules are needed to sequentially amplify the optical power of the dual-band optical signal. Specifically, each amplification module demultiplexes the dual-band optical signal into a C band optical signal and an L band optical signal, amplifies optical power of the C band optical signal and optical power of the L band optical signal, and multiplexes an amplified C band optical signal and an amplified L band optical signal. Optical power amplification is performed on the multiplexed optical signals by a next amplification module. It may be understood that, the plurality of amplification modules amplify the optical power of the dual-band optical signal, so that a quantity of components included in the optical fiber amplifier is increased, and integration of the optical fiber amplifier is lowered. In addition, demultiplexing and multiplexing are needed each time when the optical power of the dual-band optical signal is amplified, and consequently, an insertion loss of the optical fiber amplifier is higher and NF degradation is severer. However, when the optical fiber amplifier shown in this embodiment amplifies the optical power of the dual-band optical signal, there is no need to perform multiplexing and demultiplexing for a plurality of times. This effectively reduces the insertion loss of the optical fiber amplifier and alleviates NF degradation.

### Embodiment 5

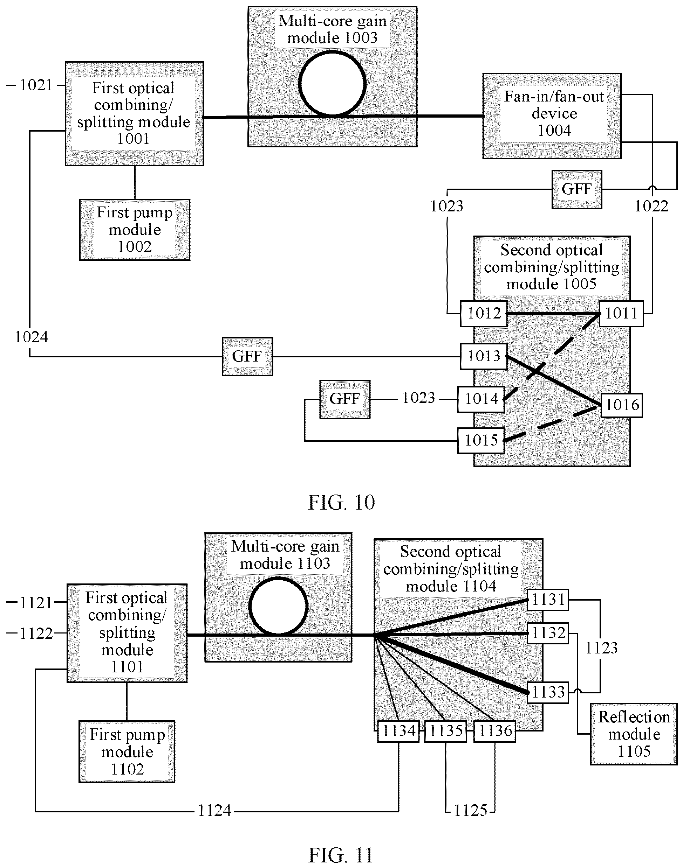

In comparison with Embodiment 4, a transmission path of a second band optical signal shown in this embodiment differs. FIG. 10 is an example diagram of a structure of a sixth embodiment of an optical fiber amplifier according to this application. The optical fiber amplifier shown in this embodiment includes a first optical combining/splitting module 1001, a first pump module 1002, a multi-core gain module 1003, a fan-in/fan-out device 1004, and a second optical combining/splitting module 1005.

The first optical combining/splitting module 1001 is connected to a fiber core 1021, and receives a first optical signal through the fiber core 1021. The first optical combining/splitting module 1001 receives a first pump optical signal from the first pump module 1002. The first optical combining/splitting module 1001 multiplexes the first optical signal and the first pump optical signal to obtain a first multiplexed optical signal. The first optical combining/splitting module 1001 transmits the first multiplexed optical signal to a first gain fiber core of the multi-core gain module 1003. The first gain fiber core of the multi-core gain module 1003 is configured to amplify optical power of the first optical signal based on the first pump optical signal to obtain a second optical signal. The first gain fiber core of the multi-core gain module 1003 transmits the second optical signal to the fan-in/fan-out device 1004. The fan-in/fan-out device 1004 fans out the second optical signal from the first gain fiber core to a fiber core 1022. The fiber core 1022 is connected between the fan-in/fan-out device 1004 and a port 1011 of the second optical combining/splitting module 1005. After receiving the second optical signal through the port 1011, the second optical combining/splitting module 1005 demultiplexes the second optical signal into a first band optical signal and a second band optical signal. For descriptions of a specific process, refer to Embodiment 4. Details are not described again.

The second optical combining/splitting module 1005 couples the first band optical signal to a port 1014. The port 1014 and a port 1015 of the second optical combining/splitting module 1005 are connected through a fiber core 1023, so that the first band optical signal output through the port 1014 is coupled to the port 1015 through the fiber core 1023. A port 1012 of the second optical combining/splitting module 1005 is connected to the fan-in/fan-out device 1004 through the fiber core 1023. The port 1012 of the second optical combining/splitting module 1005 transmits the second band optical signal to the fan-in/fan-out device 1004 through the fiber core 1023, and the fan-in/fan-out device 1004 fans in the second band optical signal to a second gain fiber core of the multi-core gain module 1003. The second gain fiber core receives a second pump optical signal from the first pump module 1002, and amplifies, based on the second pump optical signal, optical power of the second band optical signal through backward pumping. It may be understood that the second gain fiber core amplifies the optical power of the second band optical signal based on the second pump optical signal to obtain an amplified second band optical signal. In the multi-core gain module 1003, a transmission direction of the second optical signal in the first gain fiber core is opposite to a transmission direction of the second band optical signal in the second gain fiber core. The multi-core gain module 1003 can implement both forward pumping and backward pumping. This improves efficiency of optical power amplification and enhances integration of the multi-core gain module 1003.

The second gain fiber core of the multi-core gain module 1003 is connected to the first optical combining/splitting module 1001. The multi-core gain module 1003 transmits the amplified second band optical signal to the first optical combining/splitting module 1001. The first optical combining/splitting module 1001 is connected to a port 1013 of the second optical combining/splitting module 1005 through a fiber core 1024. The second optical combining/splitting module 1005 multiplexes the first band optical signal received through the port 1015 and the amplified second band optical signal received through the port 1015, to obtain a third optical signal. The third optical signal is output through a port 1016 of the second optical combining/splitting module 1005, so that the third optical signal is output from the optical fiber amplifier.

The optical fiber amplifier shown in this embodiment may include a GFF. For example, at least one GFF is included on an optical path of the fiber core 1024, at least one GFF is included on an optical path of the fiber core 1023, and at least one GFF is included on an optical path of the fiber core 1022. For descriptions of the GFF, refer to Embodiment 3. Details are not described again. The multi-core gain module of the optical fiber amplifier shown in this embodiment can implement optical power amplification through forward pumping and backward pumping. This effectively improves efficiency of optical power amplification. For descriptions of beneficial effects of the optical fiber amplifier shown in this embodiment, refer to Embodiment 4. Details are not described again.

### Embodiment 6

In comparison with Embodiment 4 and Embodiment 5, an optical fiber amplifier shown in this embodiment amplifies optical power of a dual-band optical signal by using different structures. FIG. 11 is an example diagram of a structure of a seventh embodiment of an optical fiber amplifier according to this application. The optical fiber amplifier shown in this embodiment includes a first optical combining/splitting module 1101, a first pump module 1102, a multi-core gain module 1103, and a second optical combining/splitting module 1104. In the foregoing embodiments, the multi-core gain module includes two gain fiber cores, namely, the first gain fiber core and the second gain fiber core. The multi-core gain module 1103 shown in this embodiment includes three gain fiber cores, namely, a first gain fiber core, a second gain fiber core, and a third gain fiber core.

The first optical combining/splitting module 1101 receives a first optical signal through a fiber core 1121. The first optical combining/splitting module 1101 further receives a first pump optical signal from the first pump module 1102. The first optical combining/splitting module 1101 multiplexes the first optical signal and the first pump optical signal to obtain a first multiplexed optical signal. The first optical combining/splitting module 1101 transmits the first multiplexed optical signal to the first gain fiber core of the multi-core gain module 1103. The first gain fiber core of the multi-core gain module 1103 is configured to amplify optical power of the first optical signal based on the first pump optical signal to obtain a second optical signal. The first gain fiber core of the multi-core gain module 1103 transmits the second optical signal to the second optical combining/splitting module 1104. For descriptions of a specific process, refer to the foregoing embodiments. Details are not described again. The second optical combining/splitting module 1104 receives the second optical signal from the first gain fiber core, and demultiplexes the second optical signal to obtain a first band optical signal and a second band optical signal. The second optical combining/splitting module 1104 couples the first band optical signal to a port 1131, and the port 1131 and a port 1133 of the second optical combining/splitting module 1104 are connected through a fiber core 1123, so that the first band optical signal output through the port 1131 is coupled to the port 1133 through the fiber core 1123. The second optical combining/splitting module 1104 couples, to the third gain fiber core of the multi-core gain module 1103, the first band optical signal input through the port 1133. The first optical combining/splitting module 1101 couples a third pump optical signal from the first pump module 1102 to the third gain fiber core of the multi-core gain module 1103, so that the third gain fiber core amplifies optical power of the first band optical signal based on the third pump optical signal to obtain an amplified first band optical signal. It may be understood that the third pump optical signal provides backward pumping for the first band optical signal. The first optical combining/splitting module 1101 receives the amplified first band optical signal from the third gain fiber core, and the first optical combining/splitting module 1101 couples the amplified first band optical signal to a fiber core 1122, so that the amplified first band optical signal is output from the optical fiber amplifier.

The second optical combining/splitting module 1104 couples, to a port 1134, the second band optical signal obtained through demultiplexing. The port 1134 of the second optical combining/splitting module 1104 is connected to the first optical combining/splitting module 1101 through a fiber core 1124. The second band optical signal output through the port 1134 of the second optical combining/splitting module 1104 is coupled to the first optical combining/splitting module 1101 through the fiber core 1124. The first optical combining/splitting module 1101 receives the second band optical signal, and receives a second pump optical signal from the first pump module 1102. The first optical combining/splitting module 1101 multiplexes the second band optical signal and the second pump optical signal to obtain a fifth multiplexed optical signal. The first optical combining/splitting module 1101 transmits the fifth multiplexed optical signal to the second gain fiber core of the multi-core gain module 1103. The second gain fiber core amplifies optical power of the second band optical signal based on the second pump optical signal to obtain a first amplified optical signal. The second optical combining/splitting module 1104 receives the first amplified optical signal from the second gain fiber core. The second optical combining/splitting module 1104 couples the first amplified optical signal to a port 1135 of the second optical combining/splitting module 1104. The port 1135 and a port 1136 of the second optical combining/splitting module 1104 shown in this embodiment are connected through a fiber core 1125. The second optical combining/splitting module 1104 receives the first amplified optical signal through the port 1136, and couples the first amplified optical signal to the third gain fiber core of the multi-core gain module 1103.

In this embodiment, for example, both the first band optical signal and the first amplified optical signal are coupled to the third gain fiber core for optical power amplification. For another example, the first band optical signal and the first amplified optical signal may be coupled to different gain fiber cores of the multi-core gain module 1103 for optical power amplification. This is not specifically limited in this embodiment. It may be understood that the multi-core gain module 1103 shown in this embodiment includes at least three gain fiber cores, and a specific quantity is not limited. When the first amplified optical signal is coupled to the third gain fiber core, the third pump optical signal from the first pump module 1102 is used to amplify optical power of the first amplified optical signal to obtain a second amplified optical signal. The first optical combining/splitting module 1101 receives the second amplified optical signal from the third gain fiber core. The first optical combining/splitting module 1101 couples the second amplified optical signal to the fiber core 1122. In this way, the second amplified optical signal is output from the optical fiber amplifier through the fiber core 1122. In this embodiment, for example, both the first pump optical signal and the second pump optical signal are emitted by the first pump module 1102. For another example, the first pump optical signal and the second pump optical signal may alternatively be emitted by the first pump module and the second pump module. This is not specifically limited.

For better understanding, refer to Table 1. It can be learned from Table 1 that the first band optical signal undergoes optical power amplification for the first time through the first gain fiber core of the multi-core gain module 1103, undergoes optical power amplification for the second time through the third gain fiber core of the multi-core gain module 1103, and then is output through the fiber core 1122. The optical power of the second band optical signal is amplified for three times. The optical power amplification performed for the first time is in the first gain fiber core of the multi-core gain module 1103, the optical power amplification performed for the second time is in the second gain fiber core of the multi-core gain module 1103, and the optical power amplification performed for the third time is in the third gain fiber core of the multi-core gain module 1103.

**Table 1**

| | Optical power amplification for the first time | Optical power amplification for the second time | Optical power amplification for the third time |
|---|---|---|---|
| First band optical signal | First gain fiber core | Third gain fiber core | None |
| Second band optical signal | First gain fiber core | Second gain fiber core | Third gain fiber core |

It may be understood that, in the multi-core gain module 1103 shown in this embodiment, the first gain fiber core and the third gain fiber core are jointly configured to amplify the optical power of the first band optical signal, and the first gain fiber core, the second gain fiber core, and the third gain fiber core are jointly configured to amplify the optical power of the second band optical signal.

Optionally, the optical fiber amplifier shown in this embodiment further includes a reflection module 1105. The reflection module 1105 has a function of reflecting an optical signal. For example, the reflection module 1105 may be for amplified spontaneous emission (amplified spontaneous emission, ASE). A specific type of the reflection module 1105 is not limited in this embodiment, provided that the reflection module 1105 has a function of reflecting an optical signal. After receiving the second optical signal, the second optical combining/splitting module 1104 may couple the first band optical signal to a port 1132. The port 1132 is connected to the reflection module 1105. The first band optical signal output through the port 1132 is reflected by the reflection module 1105 and returned to the port 1132. The second optical combining/splitting module 1104 couples, to the second gain fiber core of the multi-core gain module 1103, the first band optical signal input through the port 1132, so that transmission of the first band optical signal and transmission of the second band optical signal are performed in the second gain fiber core, and the first band optical signal can play a gain role for the second band optical signal.

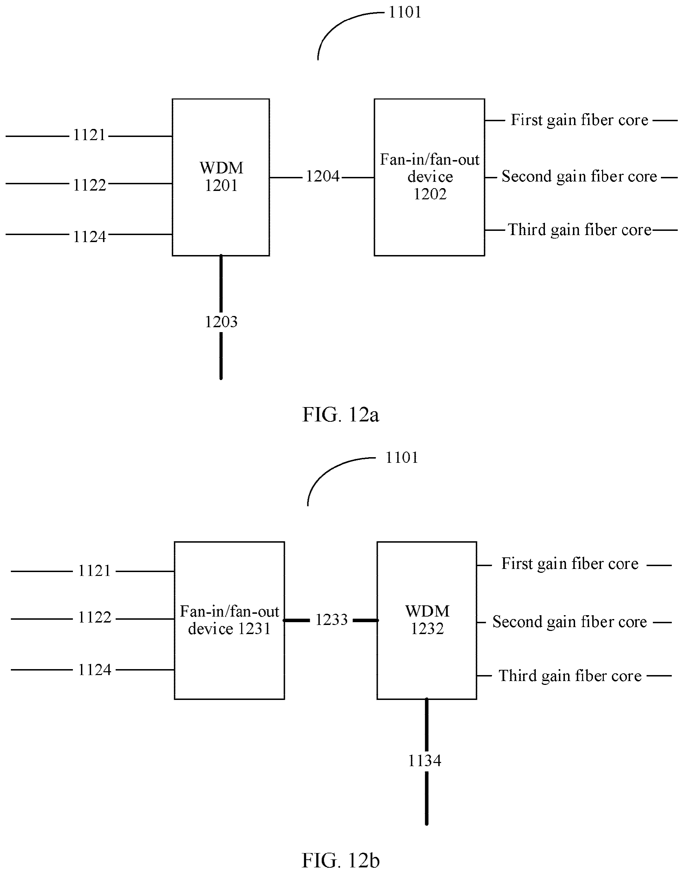

A structure of the first optical combining/splitting module shown in this embodiment is described below. FIG. 12a is an example diagram of a structure of a first embodiment of the first optical combining/splitting module shown in FIG. 11. The first optical combining/splitting module 1101 includes a WDM 1201 and a fan-in/fan-out device 1202. The WDM 1201 is connected to the fiber core 1121, the fiber core 1122, and the fiber core 1124. The WDM 1201 and the first pump module 1102 are connected through a multi-core optical fiber 1203. The WDM 1201 is connected to the fan-in/fan-out device 1202 through a fiber core 1204.

The WDM 1201 receives a first optical signal through the fiber core 1121. The WDM 1201 receives a first pump optical signal from the first pump module 1102 through the multi-core optical fiber 1203. The WDM 1201 multiplexes the first optical signal and the first pump optical signal to obtain a first multiplexed optical signal. The WDM 1201 transmits the first multiplexed optical signal to the fan-in/fan-out device 1202 through the fiber core 1204. The fan-in/fan-out device 1202 fans in the first multiplexed optical signal to the first gain fiber core. The WDM 1201 receives a third pump optical signal from the first pump module 1102 through the multi-core optical fiber 1203, and transmits the third pump optical signal to the fan-in/fan-out device 1202 through the fiber core 1204. The fan-in/fan-out device 1202 is configured to fan in the third pump optical signal to the third gain fiber core. The fan-in/fan-out device 1202 fans out an amplified first band optical signal from the third gain fiber core to the fiber core 1204. The WDM 1201 receives the amplified first band optical signal through the fiber core 1204. The WDM 1201 couples the amplified first band optical signal to the fiber core 1122, so that the amplified first band optical signal is output from the optical fiber amplifier. A second band optical signal output through a port 1134 of the second optical combining/splitting module 1104 is coupled to the WDM 1201 through the fiber core 1124. The WDM 1201 receives the second band optical signal, and receives a second pump optical signal from the first pump module 1102. The WDM 1201 multiplexes the second band optical signal and the second pump optical signal to obtain a fifth multiplexed optical signal. The WDM 1201 transmits the fifth multiplexed optical signal to the fan-in/fan-out device 1202. The fan-in/fan-out device 1202 fans in the fifth multiplexed optical signal to the second gain fiber core of the multi-core gain module 1103. The fan-in/fan-out device 1202 receives a second amplified optical signal from the third gain fiber core, and the fan-in/fan-out device 1202 fans out the second amplified optical signal to the fiber core 1204, so that the second amplified optical signal is output from the optical fiber amplifier through the fiber core 1122.

FIG. 12b is an example diagram of a structure of a second embodiment of the first optical combining/splitting module shown in FIG. 11. The first optical combining/splitting module 1101 includes a fan-in/fan-out device 1231 and a WDM 1232. The fan-in/fan-out device 1231 is connected to the fiber core 1121, the fiber core 1122, and the fiber core 1124. The fan-in/fan-out device 1231 is connected to the WDM 1232 through a multi-core optical fiber 1233, and the WDM 1232 is connected to the first pump module through a multi-core optical fiber 1234.

The fan-in/fan-out device 1231 receives a first optical signal through the fiber core 1121. The fan-in/fan-out device 1231 fans in the first band optical signal to the multi-core optical fiber 1233 to couple the first optical signal to the WDM 1232. The WDM 1232 receives a first pump optical signal from the first pump module 1102 through the multi-core optical fiber 1234. The WDM 1232 multiplexes the first optical signal and the first pump optical signal to obtain a first multiplexed optical signal. The WDM 1232 transmits the first multiplexed optical signal to the first gain fiber core. The WDM 1232 receives a third pump optical signal from the first pump module 1102 through the multi-core optical fiber 1234, and transmits the third pump optical signal to the third gain fiber core. The WDM 1232 couples an amplified first band optical signal from the third gain fiber core to the fan-in/fan-out device 1231 through the multi-core optical fiber 1233. The fan-in/fan-out device 1231 fans out the amplified first band optical signal to the fiber core 1122, so that the amplified first band optical signal is output from the optical fiber amplifier. A second band optical signal output through the port 1134 of the second optical combining/splitting module 1104 is coupled to the fan-in/fan-out device 1231 through the fiber core 1124. The fan-in/fan-out device 1231 receives the second band optical signal, and receives a second pump optical signal from the first pump module 1102 through the multi-core optical fiber 1234. The WDM 1232 multiplexes the second band optical signal and the second pump optical signal to obtain a fifth multiplexed optical signal. The WDM 1232 transmits the fifth multiplexed optical signal to the second gain fiber core. The WDM 1232 receives a second amplified optical signal from the third gain fiber core. The WDM 1232 fans in the second amplified optical signal to the multi-core optical fiber 1233, and couples the second amplified optical signal to the fan-in/fan-out device 1231 through the multi-core optical fiber 1233. The fan-in/fan-out device fans out the second amplified optical signal to the fiber core 1122 for output from the optical fiber amplifier.

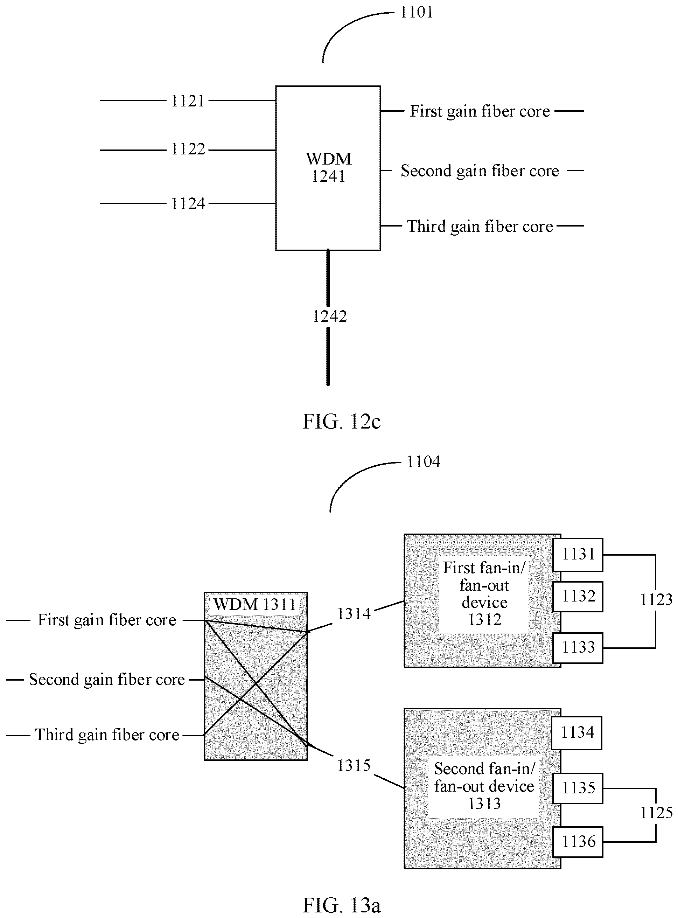

FIG. 12c is an example diagram of a structure of a third embodiment of the first optical combining/splitting module shown in FIG. 11. The first optical combining/splitting module 1101 includes a WDM 1241. The WDM 1241 is connected to the fiber core 1121, the fiber core 1122, and the fiber core 1124. The WDM 1241 is further connected to the first pump module 1102 through a multi-core optical fiber 1242. The WDM 1241 is further connected to the first gain fiber core, the second gain fiber core, and the third gain fiber core. For details about how to implement optical power amplification, refer to FIG. 11. Details are not described again.

A structure of the second optical combining/splitting module is described below. The second optical combining/splitting module 1104 may be implemented through one WDM. For descriptions of each port of the WDM and optical power amplification implemented through each port, refer to FIG. 11. Details are not described again.

FIG. 13a is an example diagram of a structure of a first embodiment of a second optical combining/splitting module shown in FIG. 11. The second optical combining/splitting module 1104 shown in this embodiment includes a WDM 1311 and a first fan-in/fan-out device 1312 and a second fan-in/fan-out device 1313 that are connected to the WDM 1311. The WDM 1311 is connected to the first gain fiber core, the second gain fiber core, and the third gain fiber core. The first fan-in/fan-out device 1312 includes the port 1131, the port 1132, and the port 1133. The second fan-in/fan-out device 1313 includes the port 1134, the port 1135, and the port 1136.

Specifically, the first gain fiber core of the multi-core gain module 1103 transmits a second optical signal to the WDM 1311, and demultiplexes the second optical signal to obtain a first band optical signal and a second band optical signal. The WDM 1311 transmits the first band optical signal to the first fan-in/fan-out device 1312 through a multi-core optical fiber 1314, and the first fan-in/fan-out device 1312 fans out the first band optical signal to the port 1131, so that the first band optical signal output by the first fan-in/fan-out device 1312 through the port 1131 is coupled to the port 1133 through the fiber core 1123. The first fan-in/fan-out device 1312 fans in, to the multi-core optical fiber 1314, the first band optical signal input through the port 1133, to couple the first band optical signal to the WDM 1311. The WDM 1311 couples the first band optical signal to the third gain fiber core. The WDM 1311 receives the second band optical signal from the first gain fiber core of the multi-core gain module 1103, and couples the second band optical signal to the second fan-in/fan-out device 1313 through a multi-core optical fiber 1315. The second fan-in/fan-out device 1313 fans out the second band optical signal to the port 1134. The second fan-in/fan-out device 1313 transmits the second band optical signal to the first optical combining/splitting module 1101 through the port 1134. The WDM 1311 receives a first amplified optical signal from the second gain fiber core. The WDM 1311 couples the first amplified optical signal to the second fan-in/fan-out device 1313 through the multi-core optical fiber 1315. The second fan-in/fan-out device 1313 fans out the first amplified optical signal to the port 1135. The port 1135 and the port 1136 of the second fan-in/fan-out device 1313 are connected through the fiber core 1125. The second fan-in/fan-out device 1313 receives the first amplified optical signal through the port 1136, and fans in the first amplified optical signal to the multi-core optical fiber 1315. The WDM 1311 receives the first amplified optical signal from the multi-core optical fiber 1315. The WDM 1311 couples the first amplified optical signal to the third gain fiber core.

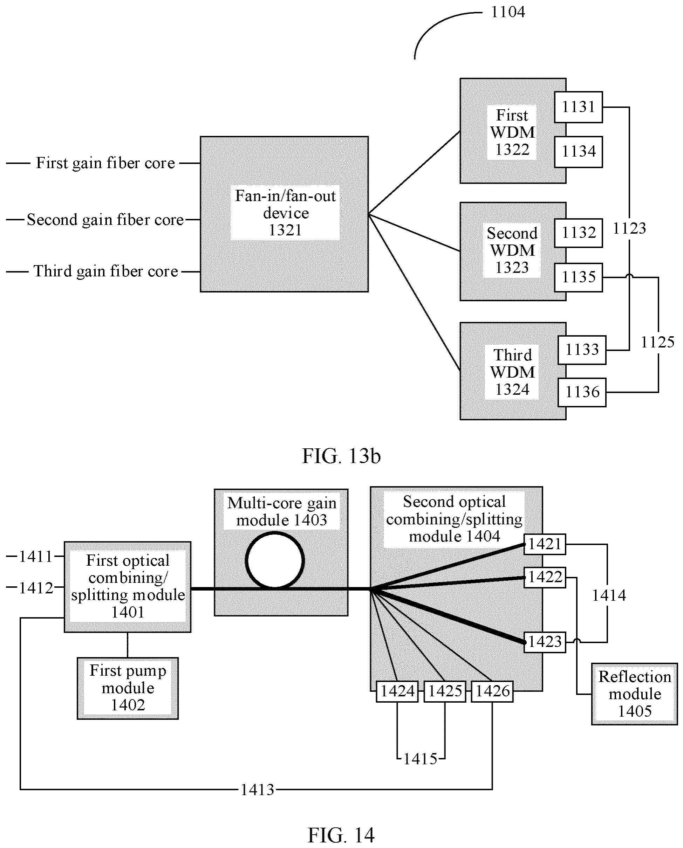

FIG. 13b is an example diagram of a structure of a second embodiment of the second optical combining/splitting module shown in FIG. 11. The second optical combining/splitting module 1104 shown in this embodiment includes a fan-in/fan-out device 1321 and a first WDM 1322, a second WDM 1323, and a third WDM 1324 that are connected to the fan-in/fan-out device 1321. The fan-in/fan-out device 1321 is connected to the first gain fiber core, the second gain fiber core, and the third gain fiber core. The first WDM 1322 includes the port 1131 and the port 1134. The second WDM 1323 includes the port 1132 and the port 1135. The third WDM 1324 includes the port 1133 and the port 1136.

Specifically, the first gain fiber core of the multi-core gain module 1103 transmits a second optical signal to the fan-in/fan-out device 1321, and the fan-in/fan-out device 1321 fans out the second optical signal to the first WDM 1322. The first WDM 1322 demultiplexes the second optical signal to obtain a first band optical signal and a second band optical signal. The first WDM 1322 couples the first band optical signal to the port 1131, so that the first band optical signal output through the port 1131 is coupled to the port 1133 through the fiber core 1123. The third WDM 1324 receives the first band optical signal through the port 1133, and couples the first band optical signal to the fan-in/fan-out device 1321. The fan-in/fan-out device 1321 fans in the first band optical signal to the third gain fiber core. The fan-in/fan-out device 1321 receives the second band optical signal from the first gain fiber core of the multi-core gain module 1103, the fan-in/fan-out device 1321 fans out the second band optical signal to the first WDM 1322, and the first WDM 1322 transmits the second band optical signal to the first optical combining/splitting module 1101 through the port 1134. The fan-in/fan-out device 1321 receives a first amplified optical signal from the second gain fiber core. The fan-in/fan-out device 1321 fans out the first amplified optical signal to the second WDM 1323. The second WDM 1323 couples the first amplified optical signal to the port 1135. The port 1135 of the second WDM 1323 and the port 1136 of the third WDM 1324 are connected through the fiber core 1125. The second WDM 1323 transmits the first amplified optical signal to the port 1136 of the third WDM 1324 through the fiber core 1125. The third WDM 1324 transmits the first amplified optical signal to the fan-in/fan-out device 1321. The fan-in/fan-out device 1321 fans in the first amplified optical signal to the third gain fiber core.

### Embodiment 7

In this embodiment, optical power of a first optical signal is amplified through three gain fiber cores included in a multi-core gain module. A difference from Embodiment 6 lies in that a transmission path of a second band optical signal shown in this embodiment differs. FIG. 14 is an example diagram of a structure of an eighth embodiment of an optical fiber amplifier according to this application. The optical fiber amplifier shown in this embodiment includes a first optical combining/splitting module 1401, a first pump module 1402, a multi-core gain module 1403, and a second optical combining/splitting module 1404. The multi-core gain module 1403 shown in this embodiment includes three gain fiber cores, namely, a first gain fiber core, a second gain fiber core, and a third gain fiber core.

The first optical combining/splitting module 1401 receives a first optical signal through a fiber core 1411. The first optical combining/splitting module 1401 multiplexes the first optical signal and a first pump optical signal from the first pump module 1402 to obtain a first multiplexed optical signal. The first optical combining/splitting module 1401 transmits the first multiplexed optical signal to the first gain fiber core of the multi-core gain module 1403. The second optical combining/splitting module 1404 receives a second optical signal from the first gain fiber core, and demultiplexes the second optical signal to obtain a first band optical signal and a second band optical signal. The second optical combining/splitting module 1404 couples the first band optical signal to the third gain fiber core of the multi-core gain module 1403. The first optical combining/splitting module 1401 couples a third pump optical signal from the first pump module 1402 to the third gain fiber core of the multi-core gain module 1403. The first optical combining/splitting module 1401 receives an amplified first band optical signal from the third gain fiber core, and the first optical combining/splitting module 1401 couples the amplified first band optical signal to a fiber core 1412, so that the amplified first band optical signal is output from the optical fiber amplifier. For a specific process, refer to FIG. 11. Details are not described again.

The second optical combining/splitting module 1404 couples, to a port 1424, the second band optical signal obtained through demultiplexing. A difference from FIG. 11 lies in that the port 1424 and a port 1425 of the second optical combining/splitting module 1404 are connected through a fiber core 1415, so that the second band optical signal output through the port 1424 is coupled to the port 1425 through the fiber core 1415. The second optical combining/splitting module 1404 couples the received second band optical signal to the second gain fiber core of the multi-core gain module 1403. The first optical combining/splitting module 1401 receives a second pump optical signal from the first pump module 1402. The first optical combining/splitting module 1401 transmits the second pump optical signal to the second gain fiber core of the multi-core gain module 1403. The second gain fiber core amplifies optical power of the second band optical signal based on the second pump optical signal to obtain a first amplified optical signal. The first optical combining/splitting module 1401 is connected to a port 1426 of the second optical combining/splitting module 1404 through a fiber core 1413. In this case, the first amplified optical signal emitted from the first optical combining/splitting module 1401 is coupled to the port 1426 through the fiber core 1413. The second optical combining/splitting module 1404 receives the first amplified optical signal through the port 1426. The second optical combining/splitting module 1404 couples the first amplified optical signal to the third gain fiber core of the multi-core gain module 1403. When the first amplified optical signal is coupled to the third gain fiber core, the third pump optical signal from the first pump module 1402 is used to amplify optical power of the first amplified optical signal to obtain a second amplified optical signal. The first optical combining/splitting module 1401 receives the second amplified optical signal from the third gain fiber core. The first optical combining/splitting module 1401 couples the second amplified optical signal to the fiber core 1412. In this way, the second amplified optical signal is output from the optical fiber amplifier through the fiber core 1412.

For descriptions of a structure of the first optical combining/splitting module shown in this embodiment, refer to FIG. 12a to FIG. 12c. For descriptions of a structure of the second optical combining/splitting module, refer to FIG. 13a to FIG. 13b. Details are not described again.

### Embodiment 8

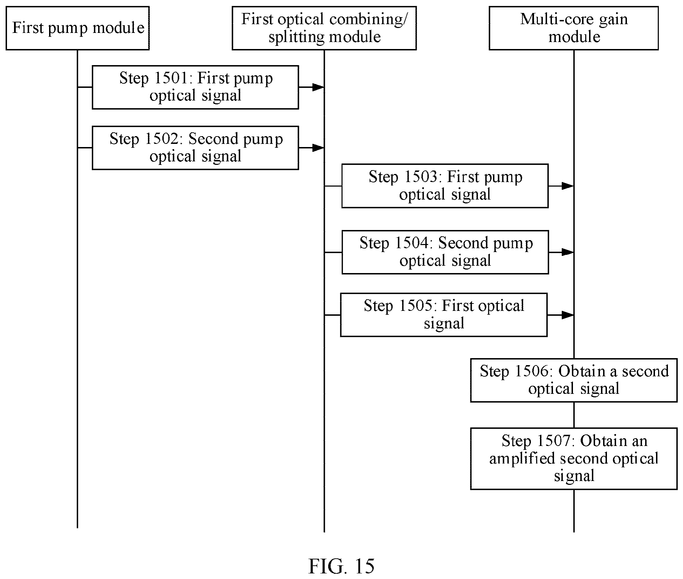

This embodiment protects an optical power amplification method. For the method shown in this embodiment, refer to FIG. 15. FIG. 15 is a flowchart of steps of a first embodiment of an optical power amplification method according to this application. For descriptions of a structure of an optical fiber amplifier to which the method shown in this embodiment is applied, refer to Embodiment 1. Details are not described again.

Step 1501: A first optical combining/splitting module receives a first pump optical signal from a first pump module.

Step 1502: The first optical combining/splitting module receives a second pump optical signal from the first pump module.

Step 1503: The first optical combining/splitting module couples the first pump optical signal to a first gain fiber core of a multi-core gain module.

Step 1504: The first optical combining/splitting module couples the second pump optical signal to a second gain fiber core of the multi-core gain module.

Step 1505: The first optical combining/splitting module couples a first optical signal to the first gain fiber core.

Specifically, the first optical combining/splitting module multiplexes the first optical signal and the first pump optical signal to obtain a first multiplexed optical signal, and then couples the first multiplexed optical signal to the first gain fiber core.

Step 1506: The first gain fiber core performs forward pumping on the first optical signal based on the first pump optical signal to obtain a second optical signal, and couples the second optical signal to the second gain fiber core.

For example, the first gain fiber core couples the second optical signal to a second optical combining/splitting module, the second optical combining/splitting module couples the second optical signal to the first optical combining/splitting module, and the first optical combining/splitting module couples the second optical signal to the second gain fiber core. The first optical combining/splitting module is configured to multiplex the second optical signal and the second pump optical signal to obtain a second multiplexed optical signal, and the first optical combining/splitting module is configured to couple the second multiplexed optical signal to the second gain fiber core. For another example, the first gain fiber core couples the second optical signal to a second optical combining/splitting module, and the second optical combining/splitting module directly couples the second optical signal to the second gain fiber core.

Step 1507: The second gain fiber core amplifies optical power of the second optical signal under an action of the second pump optical signal to obtain an amplified second optical signal.

For example, the second gain fiber core is configured to perform backward pumping on the second optical signal based on the second pump optical signal, to obtain the amplified second optical signal. For another example, the second gain fiber core is configured to perform forward pumping on the second optical signal based on the second pump optical signal, to obtain the amplified second optical signal.

For descriptions of an execution process and beneficial effects in this embodiment, refer to those shown in Embodiment 1. Details are not described again.

### Embodiment 9

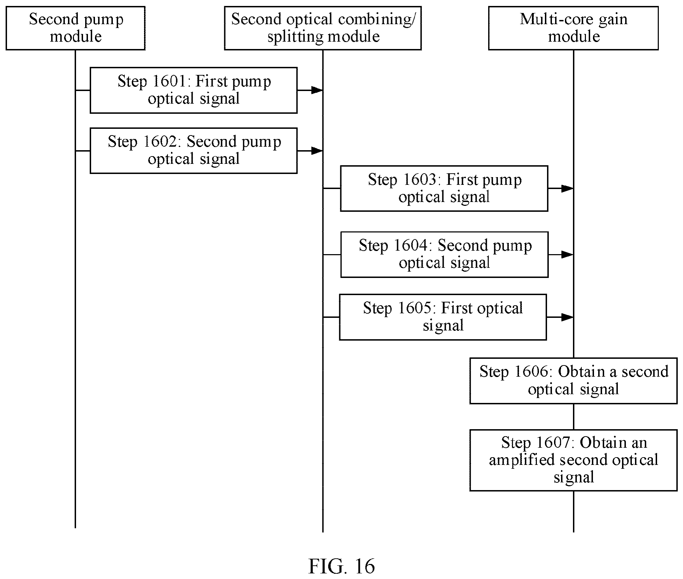

This embodiment protects an optical power amplification method. For the method shown in this embodiment, refer to FIG. 16. FIG. 16 is a flowchart of steps of a second embodiment of an optical power amplification method according to this application. For descriptions of a structure of an optical fiber amplifier to which the method shown in this embodiment is applied, refer to Embodiment 2. Details are not described again.

Step 1601: A second optical combining/splitting module receives a first pump optical signal from a second pump module.

Step 1602: The second optical combining/splitting module receives a second pump optical signal from the second pump module.

Step 1603: The second optical combining/splitting module couples the first pump optical signal to a first gain fiber core of a multi-core gain module.

Step 1604: The second optical combining/splitting module couples the second pump optical signal to a second gain fiber core of the multi-core gain module.

Step 1605: The second optical combining/splitting module couples a first optical signal to the first gain fiber core.

Step 1606: The first gain fiber core performs backward pumping on the first optical signal based on the first pump optical signal to obtain a second optical signal, and couples the second optical signal to the second gain fiber core.

Specifically, the first gain fiber core performs backward pumping on the first optical signal based on the first pump optical signal, to obtain the second optical signal. For example, the first gain fiber core couples the second optical signal to the second optical combining/splitting module; the second optical combining/splitting module multiplexes the second optical signal and the second pump optical signal to obtain a third multiplexed optical signal, and couples the third multiplexed optical signal to a first optical combining/splitting module; and the first optical combining/splitting module couples the third multiplexed optical signal to the second gain fiber core. For another example, the second optical combining/splitting module directly couples the third multiplexed optical signal to the second gain fiber core.

Step 1607: The second gain fiber core amplifies optical power of the second optical signal under an action of the second pump optical signal to obtain an amplified second optical signal.

For descriptions of an execution process and beneficial effects in this embodiment, refer to those shown in Embodiment 2. Details are not described again.

### Embodiment 10

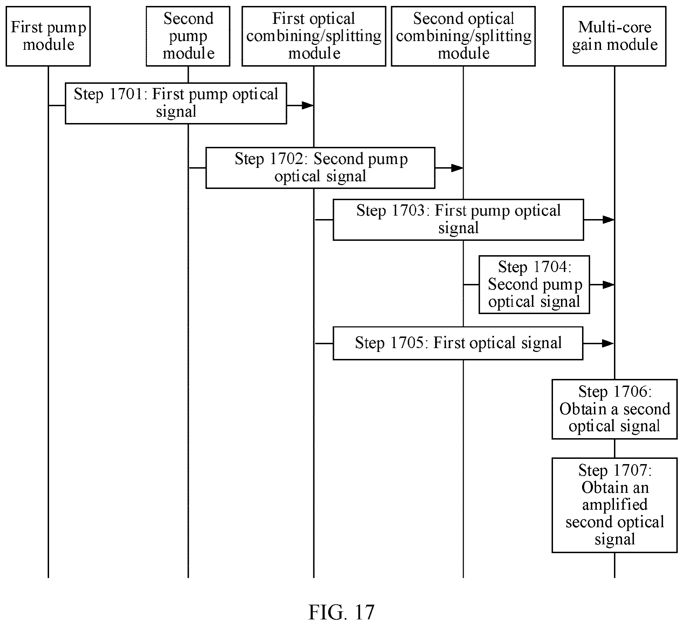

This embodiment protects an optical power amplification method. For the method shown in this embodiment, refer to FIG. 17. FIG. 17 is a flowchart of steps of a third embodiment of an optical power amplification method according to this application. For descriptions of a structure of an optical fiber amplifier to which the method shown in this embodiment is applied, refer to Embodiment 3. Details are not described again.

Step 1701: A first optical combining/splitting module receives a first pump optical signal from a first pump module.

Step 1702: A second optical combining/splitting module receives a second pump optical signal from a second pump module.

Step 1703: The first optical combining/splitting module couples the first pump optical signal to a first gain fiber core of a multi-core gain module.

Step 1704: The second optical combining/splitting module couples the second pump optical signal to a second gain fiber core of the multi-core gain module.

Step 1705: The first optical combining/splitting module couples a first optical signal to the first gain fiber core.

Step 1706: The first gain fiber core performs forward pumping on the first optical signal based on the first pump optical signal to obtain a second optical signal, and couples the second optical signal to the second gain fiber core.

For example, the first gain fiber core couples the second optical signal to the second optical combining/splitting module, the second optical combining/splitting module couples the second optical signal to the first optical combining/splitting module, and the first optical combining/splitting module couples the second optical signal to the second gain fiber core. The first optical combining/splitting module is configured to multiplex the second optical signal and the second pump optical signal to obtain a second multiplexed optical signal, and the first optical combining/splitting module is configured to couple the second multiplexed optical signal to the second gain fiber core. For another example, the first gain fiber core couples the second optical signal to the second optical combining/splitting module, and the second optical combining/splitting module directly couples the second optical signal to the second gain fiber core.

Step 1707: The second gain fiber core amplifies optical power of the second optical signal under an action of the second pump optical signal to obtain an amplified second optical signal.

For descriptions of an execution process and beneficial effects in this embodiment, refer to those shown in Embodiment 3. Details are not described again.

### Embodiment 11

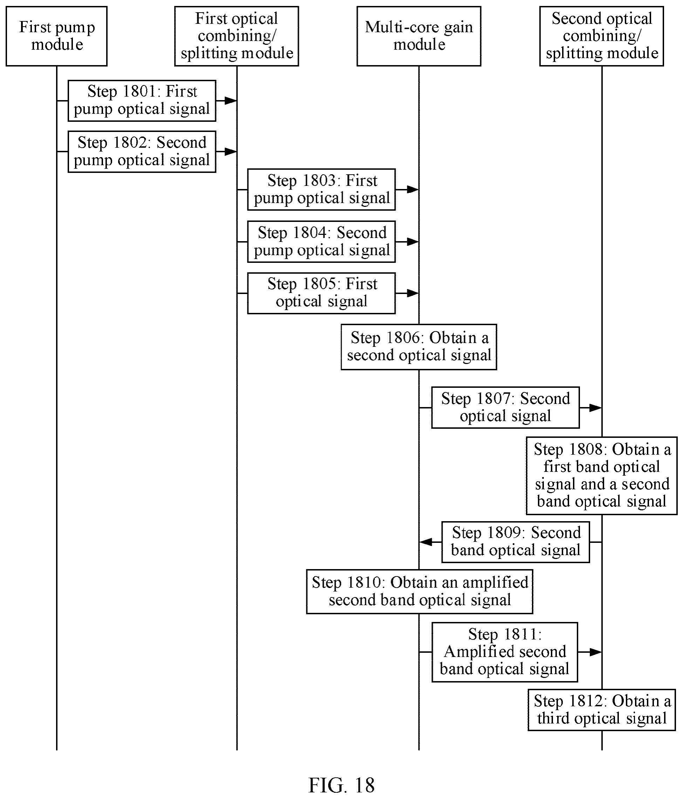

This embodiment protects an optical power amplification method. For the method shown in this embodiment, refer to FIG. 18. FIG. 18 is a flowchart of steps of a fourth embodiment of an optical power amplification method according to this application. For descriptions of a structure of an optical fiber amplifier to which the method shown in this embodiment is applied, refer to Embodiment 4 and Embodiment 5. Details are not described again.

Step 1801: A first optical combining/splitting module receives a first pump optical signal from a first pump module.

Step 1802: The first optical combining/splitting module receives a second pump optical signal from the first pump module.

Step 1803: The first optical combining/splitting module couples the first pump optical signal to a first gain fiber core of a multi-core gain module.

Step 1804: The first optical combining/splitting module couples the second pump optical signal to a second gain fiber core of the multi-core gain module.

Step 1805: The first optical combining/splitting module couples a first optical signal to the first gain fiber core.

Step 1806: The first gain fiber core performs forward pumping on the first optical signal based on the first pump optical signal to obtain a second optical signal.

Step 1807: The first gain fiber core couples the second optical signal to a second optical combining/splitting module.

Step 1808: The second optical combining/splitting module demultiplexes the second optical signal to obtain a first band optical signal and a second band optical signal.

Step 1809: The second optical combining/splitting module couples the second band optical signal to the second gain fiber core.

Step 1810: The second gain fiber core amplifies optical power of the second band optical signal under an action of the second pump optical signal to obtain an amplified second band optical signal.

Step 1811: The second gain fiber core couples the amplified second band optical signal to the second optical combining/splitting module.

Step 1812: The second optical combining/splitting module multiplexes the amplified second band optical signal and the first band optical signal to obtain a third optical signal.

For descriptions of an execution process and beneficial effects in this embodiment, refer to those shown in Embodiment 4 and Embodiment 5. Details are not described again.

### Embodiment 12

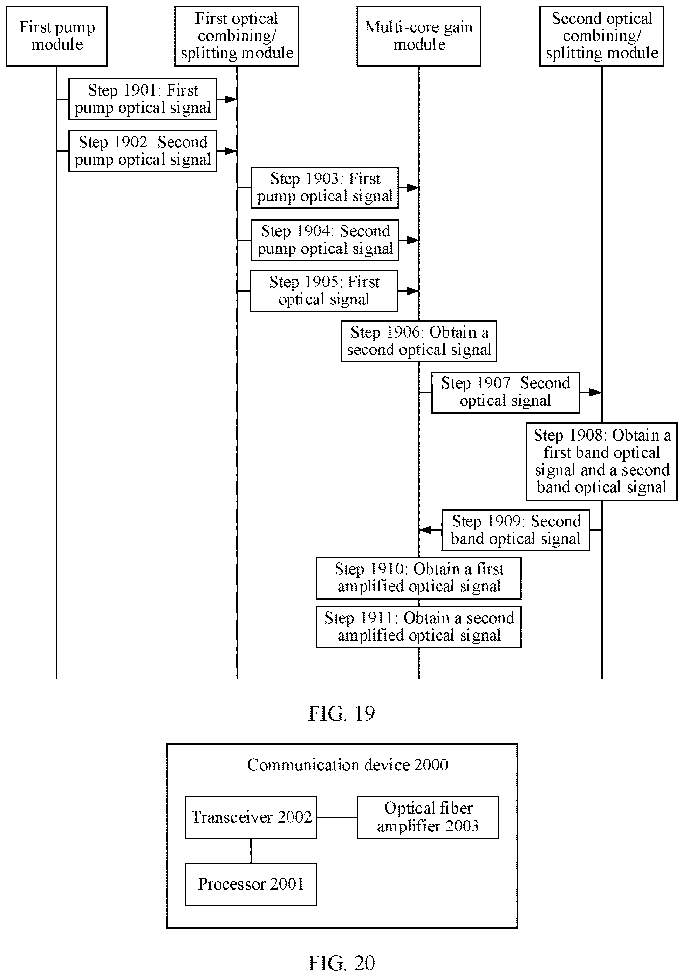

This embodiment protects an optical power amplification method. For the method shown in this embodiment, refer to FIG. 19. FIG. 19 is a flowchart of steps of a fifth embodiment of an optical power amplification method according to this application. For descriptions of a structure of an optical fiber amplifier to which the method shown in this embodiment is applied, refer to Embodiment 6 and Embodiment 7. Details are not described again.

Step 1901: A first optical combining/splitting module receives a first pump optical signal from a first pump module.

Step 1902: The first optical combining/splitting module receives a second pump optical signal from the first pump module.

Step 1903: The first optical combining/splitting module couples the first pump optical signal to a first gain fiber core of a multi-core gain module.

Step 1904: The first optical combining/splitting module couples the second pump optical signal to a second gain fiber core of the multi-core gain module.

Step 1905: The first optical combining/splitting module couples a first optical signal to the first gain fiber core.

Step 1906: The first gain fiber core performs forward pumping on the first optical signal based on the first pump optical signal to obtain a second optical signal.

Step 1907: The first gain fiber core couples the second optical signal to a second optical combining/splitting module.

Step 1908: The second optical combining/splitting module demultiplexes the second optical signal to obtain a first band optical signal and a second band optical signal.

Step 1909: The second optical combining/splitting module couples the second band optical signal to the second gain fiber core.

Step 1910: The second gain fiber core amplifies optical power of the second band optical signal to obtain a first amplified optical signal, and couples the first amplified optical signal to a third gain fiber core.

For example, the second gain fiber core is configured to couple the first amplified optical signal to the second optical combining/splitting module, the second optical combining/splitting module is configured to couple the first amplified optical signal to the first optical combining/splitting module, and the first optical combining/splitting module is configured to couple the first amplified optical signal to the third gain fiber core. For another example, the second gain fiber core is configured to couple the first amplified optical signal to the second optical combining/splitting module, and the second optical combining/splitting module is configured to couple the first amplified optical signal to the third gain fiber core.

Step 1911: The third gain fiber core amplifies optical power of the first amplified optical signal to obtain a second amplified optical signal.

For descriptions of an execution process and beneficial effects in this embodiment, refer to those shown in Embodiment 6 and Embodiment 7. Details are not described again.

This application further provides a communication device. FIG. 20 is an example diagram of a structure of an embodiment of a communication device according to this application. The communication device 2000 shown in this embodiment includes a transceiver 2002 and a processor 2001, where the transceiver 2002 is connected to the processor 2001. The communication device 2000 shown in this embodiment further includes an optical fiber amplifier 2003 connected to the transceiver 2002. For descriptions of a specific structure of the optical fiber amplifier 2003, refer to any one of Embodiment 1 to Embodiment 7. Details are not described again.

The processor 2001 shown in this embodiment may be one or more chips, or one or more integrated circuits. For example, the processor 2001 may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processing circuits (digital signal processors, DSPs), micro controller units (micro controller units, MCUs), programmable controllers (programmable logic devices, PLDs) or other integrated chips, or any combination of the foregoing chips or processors.

The transceiver 2002 shown in this embodiment may be a device that has an optical signal sending and receiving capability, for example, an optical module. For example, if the communication device 2000 shown in this embodiment is the sending device shown in FIG. 2, the transceiver 2002 is a transmitter having an optical signal sending capability. Specifically, the processor 2001 is configured to send an electrical signal to the transceiver 2002. The transceiver 2002 is configured to obtain a first optical signal based on the electrical signal, and send the first optical signal to the optical fiber amplifier 2003. The optical fiber amplifier 2003 is configured to amplify optical power of the first optical signal to obtain an amplified second optical signal.

If the communication device 2000 shown in this embodiment is the receiving device shown in FIG. 2, the transceiver 2002 is a receiver having an optical signal receiving capability. Specifically, the optical fiber amplifier 2003 is configured to amplify optical power of the first optical signal to obtain the amplified second optical signal. The transceiver 2002 is configured to obtain an electrical signal based on the amplified second optical signal. The processor 2001 is configured to receive the electrical signal.

This application further provides an optical communication system. For descriptions of a structure of the optical communication system, refer to FIG. 2. Details are not described again.

In conclusion, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions in embodiments of this application.

## Claims

1. An optical fiber amplifier, comprising a first optical combining/splitting module, a multi-core gain module, and a second optical combining/splitting module, wherein the multi-core gain module is connected between the first optical combining/splitting module and the second optical combining/splitting module, and the multi-core gain module comprises at least a first gain fiber core and a second gain fiber core;
the first optical combining/splitting module is configured to couple a first optical signal to the first gain fiber core;
the first gain fiber core is configured to amplify optical power of the first optical signal to obtain a second optical signal, and is configured to couple the second optical signal to the second optical combining/splitting module;
the second optical combining/splitting module is configured to couple the second optical signal to the second gain fiber core; and
the second gain fiber core is configured to amplify optical power of the second optical signal to obtain an amplified second optical signal.

2. The optical fiber amplifier according to claim 1, wherein the optical fiber amplifier further comprises a target pump module, the target pump module is connected to a target optical combining/splitting module, and the target optical combining/splitting module is at least either of the first optical combining/splitting module or the second optical combining/splitting module;
the target optical combining/splitting module is configured to receive a first pump optical signal and a second pump optical signal from the target pump module;
the target optical combining/splitting module is configured to couple the first pump optical signal to the first gain fiber core, and is configured to couple the second pump optical signal to the second gain fiber core;
in a process in which the first gain fiber core is configured to amplify the optical power of the first optical signal to obtain the second optical signal, the first gain fiber core is specifically configured to amplify the optical power of the first optical signal under an action of the first pump optical signal to obtain the second optical signal; and
in a process in which the second gain fiber core is configured to amplify the optical power of the second optical signal to obtain the amplified second optical signal, the second gain fiber core is specifically configured to amplify the optical power of the second optical signal under an action of the second pump optical signal to obtain the amplified second optical signal.

3. The optical fiber amplifier according to claim 2, wherein the target pump module comprises a first pump module, the target optical combining/splitting module comprises the first optical combining/splitting module, the first optical combining/splitting module is connected to the first pump module, and in a process in which the target optical combining/splitting module is configured to receive the first pump optical signal from the target pump module, the first optical combining/splitting module is configured to receive the first pump optical signal from the first pump module;
in a process in which the first optical combining/splitting module is configured to couple the first optical signal to the first gain fiber core, the first optical combining/splitting module is configured to multiplex the first optical signal and the first pump optical signal to obtain a first multiplexed optical signal, and the first optical combining/splitting module is configured to couple the first multiplexed optical signal to the first gain fiber core; and
in a process in which the first gain fiber core is configured to amplify the optical power of the first optical signal under the action of the first pump optical signal to obtain the second optical signal, the first gain fiber core is configured to perform forward pumping on the first optical signal based on the first pump optical signal to obtain the second optical signal.

4. The optical fiber amplifier according to claim 3, wherein in a process in which the target optical combining/splitting module is configured to receive the second pump optical signal, the first optical combining/splitting module is configured to receive the second pump optical signal from the first pump module; and
in a process in which the second gain fiber core is configured to amplify the optical power of the second optical signal under the action of the second pump optical signal to obtain the amplified second optical signal, the second gain fiber core is configured to perform backward pumping on the second optical signal based on the second pump optical signal to obtain the amplified second optical signal.

5. The optical fiber amplifier according to claim 3, wherein the second optical combining/splitting module is connected to the first optical combining/splitting module, and in a process in which the target optical combining/splitting module is configured to receive the second pump optical signal from the target pump module, the first optical combining/splitting module is configured to receive the second pump optical signal from the first pump module;
in a process in which the second optical combining/splitting module is configured to couple the second optical signal to the second gain fiber core, the second optical combining/splitting module is configured to couple the second optical signal to the first optical combining/splitting module, the first optical combining/splitting module is configured to multiplex the second optical signal and the second pump optical signal to obtain a second multiplexed optical signal, and the first optical combining/splitting module is configured to couple the second multiplexed optical signal to the second gain fiber core; and
in a process in which the second gain fiber core is configured to amplify the optical power of the second optical signal under the action of the second pump optical signal to obtain the amplified second optical signal, the second gain fiber core is configured to perform forward pumping on the second optical signal based on the second pump optical signal to obtain the amplified second optical signal.

6. The optical fiber amplifier according to claim 2, wherein the target pump module comprises a second pump module, the target optical combining/splitting module comprises the second optical combining/splitting module, the second optical combining/splitting module is connected to the second pump module, and in a process in which the target optical combining/splitting module is configured to receive the first pump optical signal from the target pump module, the second optical combining/splitting module is configured to receive the first pump optical signal from the second pump module; and
in a process in which the first gain fiber core is configured to amplify the optical power of the first optical signal under the action of the first pump optical signal to obtain the second optical signal, the first gain fiber core is configured to perform backward pumping on the first optical signal based on the first pump optical signal to obtain the second optical signal.

7. The optical fiber amplifier according to claim 6, wherein in a process in which the target optical combining/splitting module is configured to receive the second pump optical signal, the second optical combining/splitting module is configured to receive the second pump optical signal from the second pump module;
in a process in which the second optical combining/splitting module is configured to couple the second optical signal to the second gain fiber core, the second optical combining/splitting module is configured to multiplex the second optical signal and the second pump optical signal to obtain a third multiplexed optical signal, and the second optical combining/splitting module is configured to couple the third multiplexed optical signal to the second gain fiber core; and
in a process in which the second gain fiber core is configured to amplify the optical power of the second optical signal under the action of the second pump optical signal to obtain the amplified second optical signal, the second gain fiber core is configured to perform forward pumping on the second optical signal based on the second pump optical signal to obtain the amplified second optical signal.

8. The optical fiber amplifier according to claim 6, wherein the first optical combining/splitting module is connected to the second optical combining/splitting module, and in a process in which the target optical combining/splitting module is configured to receive the second pump optical signal, the second optical combining/splitting module is configured to receive the second pump optical signal from the second pump module;
in a process in which the second optical combining/splitting module is configured to couple the second optical signal to the second gain fiber core, the second optical combining/splitting module is configured to couple the second optical signal to the first optical combining/splitting module, and the first optical combining/splitting module is configured to couple the second optical signal to the second gain fiber core; and
in a process in which the second gain fiber core is configured to amplify the optical power of the second optical signal under the action of the second pump optical signal to obtain the amplified second optical signal, the second gain fiber core is configured to perform backward pumping on the second optical signal based on the second pump optical signal to obtain the amplified second optical signal.

9. The optical fiber amplifier according to claim 3, wherein the target pump module further comprises a second pump module, the target optical combining/splitting module further comprises the second optical combining/splitting module, and the second optical combining/splitting module is connected to the second pump module;
in a process in which the target optical combining/splitting module is configured to receive the second pump optical signal from the target pump module, the second optical combining/splitting module is configured to receive the second pump optical signal from the second pump module;
in a process in which the second optical combining/splitting module is configured to couple the second optical signal to the second gain fiber core, the second optical combining/splitting module is configured to multiplex the second optical signal and the second pump optical signal to obtain a fourth multiplexed optical signal, and the second optical combining/splitting module is configured to couple the fourth multiplexed optical signal to the second gain fiber core; and
in a process in which the second gain fiber core is configured to amplify the optical power of the second optical signal under the action of the second pump optical signal to obtain the amplified second optical signal, the second gain fiber core is configured to perform forward pumping on the second optical signal based on the second pump optical signal to obtain the amplified second optical signal.

10. The optical fiber amplifier according to claim 3, wherein the first optical combining/splitting module is connected to the second optical combining/splitting module, the target pump module further comprises a second pump module, the target optical combining/splitting module further comprises the second optical combining/splitting module, and the second optical combining/splitting module is connected to the second pump module;
in a process in which the target optical combining/splitting module is configured to receive the second pump optical signal from the target pump module, the second optical combining/splitting module is configured to receive the second pump optical signal from the second pump module;
in a process in which the second optical combining/splitting module is configured to couple the second optical signal to the second gain fiber core, the second optical combining/splitting module is configured to couple the second optical signal to the first optical combining/splitting module, and the first optical combining/splitting module is configured to couple the second optical signal to the second gain fiber core; and
in a process in which the second gain fiber core is configured to amplify the optical power of the second optical signal under the action of the second pump optical signal to obtain the amplified second optical signal, the second gain fiber core is configured to perform backward pumping on the second optical signal based on the second pump optical signal to obtain the amplified second optical signal.

11. The optical fiber amplifier according to any one of claims 1 to 10, wherein the second optical combining/splitting module is further configured to demultiplex the second optical signal to obtain a first band optical signal and a second band optical signal, and in the process in which the second optical combining/splitting module is configured to couple the second optical signal to the second gain fiber core, the second optical combining/splitting module is configured to couple the second band optical signal to the second gain fiber core;
in the process in which the second gain fiber core is configured to amplify the optical power of the second optical signal to obtain the amplified second optical signal, the second gain fiber core is configured to amplify optical power of the second band optical signal to obtain an amplified second band optical signal, and is configured to couple the amplified second band optical signal to the second optical combining/splitting module; and
the second optical combining/splitting module is configured to multiplex the amplified second band optical signal and the first band optical signal to obtain a third optical signal.

12. The optical fiber amplifier according to claim 11, wherein the optical fiber amplifier further comprises a fan-in/fan-out device, the fan-in/fan-out device is connected between the multi-core gain module and the second optical combining/splitting module, and the fan-in/fan-out device is connected to the second optical combining/splitting module through a first connection fiber core; and
in a process in which the first gain fiber core is configured to couple the second optical signal to the second optical combining/splitting module, the fan-in/fan-out device is configured to fan out the second optical signal to the first connection fiber core.

13. The optical fiber amplifier according to claim 12, wherein the fan-in/fan-out device is further connected to the second optical combining/splitting module through a second connection fiber core, and in a process in which the second gain fiber core is configured to couple the amplified second band optical signal to the second optical combining/splitting module, the fan-in/fan-out device is configured to fan out the amplified second band optical signal to the second connection fiber core.

14. The optical fiber amplifier according to claim 12, wherein the fan-in/fan-out device is further connected to the second optical combining/splitting module through a second connection fiber core, and in a process in which the second optical combining/splitting module is configured to couple the second band optical signal to the second gain fiber core, the second optical combining/splitting module is configured to couple the second band optical signal to the second connection fiber core, and the fan-in/fan-out device is configured to fan in the second band optical signal to the second gain fiber core.

15. The optical fiber amplifier according to any one of claims 1 to 10, wherein the multi-core gain module further comprises a third gain fiber core, and the second optical combining/splitting module is further configured to demultiplex the second optical signal to obtain a first band optical signal and a second band optical signal, wherein the third gain fiber core is configured to amplify optical power of the first band optical signal and optical power of the second band optical signal, and the second gain fiber core and the third gain fiber core are jointly configured to amplify the optical power of the second band optical signal.

16. The optical fiber amplifier according to claim 15, wherein the first optical combining/splitting module is connected to the second optical combining/splitting module, and in the process in which the second optical combining/splitting module is configured to couple the second optical signal to the second gain fiber core, the second optical combining/splitting module is configured to couple the second band optical signal to the second gain fiber core;
in the process in which the second gain fiber core is configured to amplify the optical power of the second optical signal to obtain the amplified second optical signal, the second gain fiber core is configured to amplify the optical power of the second band optical signal to obtain a first amplified optical signal, and the second gain fiber core is configured to couple the first amplified optical signal to the third gain fiber core; and
the third gain fiber core is configured to amplify optical power of the first amplified optical signal to obtain a second amplified optical signal.

17. The optical fiber amplifier according to claim 16, wherein the first optical combining/splitting module is connected to the second optical combining/splitting module; and
in a process in which the second gain fiber core is configured to couple the first amplified optical signal to the third gain fiber core, the second gain fiber core is configured to couple the first amplified optical signal to the second optical combining/splitting module, the second optical combining/splitting module is configured to couple the first amplified optical signal to the first optical combining/splitting module, and the first optical combining/splitting module is configured to couple the first amplified optical signal to the third gain fiber core; or
the second gain fiber core is configured to couple the first amplified optical signal to the second optical combining/splitting module, and the second optical combining/splitting module is configured to couple the first amplified optical signal to the third gain fiber core.

18. An optical power amplification method, wherein the method is applied to an optical fiber amplifier, the optical fiber amplifier comprises a first optical combining/splitting module, a multi-core gain module, and a second optical combining/splitting module, the multi-core gain module comprises at least a first gain fiber core and a second gain fiber core, and the method comprises:
coupling a first optical signal to the first gain fiber core through the first optical combining/splitting module;
amplifying, through the first gain fiber core, optical power of the first optical signal to obtain a second optical signal, and coupling the second optical signal to the second optical combining/splitting module;
coupling the second optical signal to the second gain fiber core through the second optical combining/splitting module; and
amplifying, through the second gain fiber core, optical power of the second optical signal to obtain an amplified second optical signal, wherein the first gain fiber core and the second gain fiber core separately perform optical power amplification based on different pump optical signals.

19. The method according to claim 18, wherein the optical fiber amplifier further comprises a target pump module, and before the amplifying, through the first gain fiber core, the optical power of the first optical signal to obtain the second optical signal, the method further comprises:
receiving a first pump optical signal and a second pump optical signal from the target pump module through a target optical combining/splitting module, wherein the target optical combining/splitting module is at least either of the first optical combining/splitting module or the second optical combining/splitting module; and
coupling, through the target optical combining/splitting module, the first pump optical signal to the first gain fiber core, and coupling the second pump optical signal to the second gain fiber core;
the amplifying, through the first gain fiber core, the optical power of the first optical signal to obtain the second optical signal comprises:
amplifying, through the first gain fiber core, the optical power of the first optical signal under an action of the first pump optical signal to obtain the second optical signal; and
the amplifying, through the second gain fiber core, the optical power of the second optical signal to obtain the amplified second optical signal comprises:
amplifying, through the second gain fiber core, the optical power of the second optical signal under an action of the second pump optical signal to obtain the amplified second optical signal.

20. A sending device, wherein the sending device comprises a processor, a transmitter, and an optical fiber amplifier, the transmitter is connected to the processor and the optical fiber amplifier, and the optical fiber amplifier is as described in any one of claims 1 to 17;
the processor is configured to send an electrical signal to the transmitter;
the transmitter is configured to obtain a first optical signal based on the electrical signal, and send the first optical signal to the optical fiber amplifier; and
the optical fiber amplifier is configured to amplify optical power of the first optical signal to obtain the amplified second optical signal.

21. A receiving device, wherein the receiving device comprises a processor, a receiver, and an optical fiber amplifier, the receiver is connected to the processor and the optical fiber amplifier, and the optical fiber amplifier is as described in any one of claims 1 to 17;
the optical fiber amplifier is configured to amplify optical power of the first optical signal to obtain the amplified second optical signal;
the receiver is configured to obtain an electrical signal based on the amplified second optical signal; and
the processor is configured to receive the electrical signal.

22. An optical communication system, wherein the optical communication system comprises a sending device, a receiving device, and at least one optical fiber amplifier connected between the sending device and the receiving device, and the optical fiber amplifier is as described in any one of claims 1 to 17.
